(19) Europäisches Patentamt / European Patent Office / Office européen des brevets

(11) **EP 3 064 349 B1**

(12) **EUROPEAN PATENT SPECIFICATION**

(45) Date of publication and mention of the grant of the patent:
**17.04.2019 Bulletin 2019/16**

(21) Application number: **14857761.2**

(22) Date of filing: **29.10.2014**

(51) Int Cl.:
**B32B 15/09** *(2006.01)*    **B32B 37/06** *(2006.01)*
**B65D 65/40** *(2006.01)*

(86) International application number:
**PCT/JP2014/005477**

(87) International publication number:
**WO 2015/064100 (07.05.2015 Gazette 2015/18)**

(54) **LAMINATED METAL SHEET FOR CONTAINER, METHOD FOR PRODUCING METAL CAN, AND METHOD FOR EVALUATING METAL SHEET MOLDABILITY**

LAMINIERTES BLECH FÜR BEHÄLTER, VERFAHREN ZUR HERSTELLUNG EINER METALLDOSE UND VERFAHREN ZUR BEWERTUNG DER BLECHFORMBARKEIT

FEUILLE DE MÉTAL LAMINÉE POUR RÉCIPIENT, PROCÉDÉ DE PRODUCTION D'UNE CANETTE EN MÉTAL ET PROCÉDÉ D'ÉVALUATION DE L'APTITUDE AU MOULAGE D'UNE FEUILLE DE MÉTAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2013 JP 2013224851**

(43) Date of publication of application:
**07.09.2016 Bulletin 2016/36**

(73) Proprietor: **JFE Steel Corporation**
**Tokyo 100-0011 (JP)**

(72) Inventors:
• **YAMANAKA, Yoichiro**
**Tokyo 100-0011 (JP)**
• **NAKAGAWA, Yusuke**
**Tokyo 100-0011 (JP)**
• **KITAGAWA, Junichi**
**Tokyo 100-0011 (JP)**
• **NAKAMARU, Hiroki**
**Tokyo 100-0011 (JP)**

(74) Representative: **Haseltine Lake LLP**
**Lincoln House, 5th Floor**
**300 High Holborn**
**London WC1V 7JH (GB)**

(56) References cited:
JP-A- H10 128 935      JP-A- H11 138 693
JP-A- 2002 173 541      JP-A- 2003 268 131
JP-A- 2007 253 453      JP-A- 2007 253 454
JP-A- 2007 253 454      JP-A- 2010 105 263

**Description**

Technical Field

The present invention relates to a laminated metal sheet for containers that is suitable for materials of lids and bodies of metal cans, to a metal can produced using the metal sheet, and to a metal sheet formability evaluation method for evaluating formability of a laminated metal sheet for containers.

Background Art

Metal sheets conventionally used as metal can materials for food cans etc. include tin-free steel (TFS) sheets, aluminum sheets, etc. These metal sheets are coated for improving corrosion resistance, durability, weather resistance, etc. However, the step of coating includes complicated baking treatment (heat drying treatment), requires a very long treatment time, and has another problem in that the amount of solvent discharged is large.

To solve these problems, laminated metal sheets each formed of a metal sheet and a thermoplastic resin laminated thereto have been developed as an alternative to the coated steel sheets. At present, these metal sheets are industrially used as materials for food cans.

A two-piece can referred to as a DR can is formed by drawing a preprinted and heat-treated metal sheet into a cup shape. Such a DR can is highly flexible in design because a series of design patterns can be formed not only on the side surface of the can but also on the bottom of the can. However, the image printed on the side surface of the can is distorted during forming of the can. Therefore, when a two-piece can is produced, a pre-distorted image is printed on the surface of the metal sheet (distortion printing), whereby a distortion-free image is achieved in the can after forming.

In a conventional DR can, the inner side of the can is coated with an epoxy phenol paint having a high anticorrosive effect. However, this method has a problem in that low-molecular-weight components in the paint may dissolve into the contents of the can when the can is held in a high-temperature high-humidity environment, for example, during retort sterilization treatment. These dissolved components include a chemical substance called BPA (bisphenol A), which is a major component. BPA has a chemical structure similar to that of a female sex hormone. Therefore, when BPA, together with the contents, enters the human body, the BPA may act as an endocrine disruptor. Therefore, there is a tendency, mainly in Europe and North America, to limit the use of BPA by law.

Under the foregoing circumstances, the present inventors have conducted extensive studies in order to allow a laminated metal sheet to be applied to the DR cans described above. Polyester contains no hazardous substances such as BPA. Therefore, the use of polyester for a laminate layer can ensure much higher safety than when a conventional coated metal sheet is used. One feature of the laminate layer is that its mechanical properties and coatability are better than those of a coating film. Therefore, it has been known that the laminate layer is applicable to various 2-piece cans.

As described above, the laminated metal sheet has many advantages, but there is a problem in that it is susceptible to heat. PET films currently used for many laminated metal sheets have crystallinity. Therefore, when a PET film is subjected to heat treatment at a temperature equal to or higher than its glass transition temperature (Tg) (about 70 to 80°C), crystallization proceeds in the film. As the crystallization proceeds, molecular chains become regularly arranged and closely packed, and therefore the strength of the film increases. However, when this PET film is used, the flexibility of the film is lost, and this causes deterioration of formability.

The DR can studied by the present inventors is subjected to printing treatment and heat treatment before forming. The temperature of the heat treatment after the printing treatment is generally within the range of 160°C to 210°C. When a conventional PET film-laminated metal sheet is used, crystallization proceeds rapidly in the film, and this causes significant deterioration of formability. Therefore, the film does not follow deformation during can manufacturing processing, and cracks occur in the film. In extreme cases, the film ruptures, and a can is not able to be produced. The most difficult technical problem in applying a laminated metal sheet to a DR can is to restrain the thermal crystallization of the film to thereby ensure formability.

An example of the literature that describes a technique for restraining thermal crystallization of a PET film to thereby improve formability after heat treatment is Patent Literature 1. In Patent Literature 1, an X-ray diffraction intensity ratio of a polyester film is controlled within a specific range to thereby control the crystalline content in the polyester. The point of this technique is that the presence of the upper limit of the amorphous content in the polyester before heat treatment is indicated, and one cause of deterioration of formability is the formation of spherulites in amorphous regions by thermal crystallization. The spherulites have an isotropically grown complicated crystalline structure, are very brittle, and therefore inhibit formability significantly. This technique aims to restrain thermal crystallization by limiting the content of amorphous polyester that causes the formation of spherulites.

Patent Literature 2 discloses a technique for improving formability after heat treatment using structural analysis by laser Raman spectroscopy. In the technique described in Patent Literature 2, attention is focused on a top layer of a laminated film. In this technique, linearly polarized laser light is used, and the half-width of a specific Raman shift peak is controlled within a certain range to thereby improve formability after heat treatment.

Patent literature 3 discloses a laminated metal sheet for containers, a method for producing a metal can, and a metal sheet formability evaluation method in accordance with the preamble of each independent claim, and in which the Raman band intensity ratio is determined after heat treatment.

Citation List

Patent Literature

PTL 1: Japanese Unexamined Patent Application Publication No. 2002-127306
PTL 2: Japanese Unexamined Patent Application Publication No. 2004-345232
PTL 3: Japanese Unexamined Patent Application Publication No. 2007-253454

Summary of Invention

Technical Problem

However, with the technique described in Patent Literature 1, deterioration of formability due to thermal crystallization of the film is not suppressed effectively. In the technique described in Patent Literature 2, the optimal crystalline-amorphous structure has not been determined.

An object of the present invention is to provide an novel technique that can solve all the problems in the related art, i.e., to provide a laminated metal sheet for containers that has excellent formability even after heat treatment performed after coating, printing, etc. and is suitable for DR cans, to provide a method for producing a metal can using the above metal sheet, and to provide a method for evaluating the formability of a metal sheet. Solution to Problem

The reason that deterioration of formability due to crystallization of the film is not effectively suppressed with the technique described in Patent Literature 1 is that the information obtained from the X-ray diffraction intensity ratio used in Patent Literature 1 is the average information about the film as a whole and is not the information from a specific portion of the film.

The present inventors have conducted extensive studies on the technique described in Patent Literature 1 and found that a key factor in order to suppress deterioration of formability after heat treatment is to control the crystalline-amorphous structure of a specific portion of the film and that analysis based on information that is not obtained by X-ray diffraction is necessary. Specifically, with the technique in Patent Literature 1, the amorphous structure inherently excellent in formability is excessively reduced in amount, and this causes deterioration of the formability of the laminate film itself. Therefore, the technique described in Patent Literature 1 is not expected to be capable of being applied to DR cans with a high degree of working, which is the purpose of the present invention, not only after heat treatment but also before heat treatment. This is clear also from the drawing ratios and shapes of can bodies shown in EXAMPLES in Patent Literature 1.

The reason that it is difficult to determine the optimal crystalline-amorphous structure in the technique described in Patent Literature 2 is that only the information about the crystalline content obtained from the half-width of the Raman shift peak is taken into consideration. Although attention is focused on a specific portion, this technique is designed based on average information. Therefore, with the technique described in Patent Literature 2, as with the technique described in Patent Literature 1, the amount of the amorphous structure excellent in terms of formability is excessively reduced, and as a result, the formability of the laminated film itself is sacrificed. This is clear also from the fact that no examples of processed cans and lids are shown in EXAMPLES in Patent Literature 2 and only the results of a DuPont impact test are disclosed.

The present inventors have conducted extensive studies in order to solve the foregoing problems and found the following. To ensure an excellent formability even after heat treatment has been performed after coating, printing, etc., it is necessary to precisely control the crystal structure of a surface of a film in a laminated metal sheet for containers and the crystal structure inside the film. To analyze these structures, the intensity ratio of a Raman band intensity ($I_{2968}$) around 2,968 cm$^{-1}$ to a Raman band intensity ($I_{3085}$) around 3,085 cm$^{-1}$ that are obtained by laser Raman spectroscopy, i.e., $I_{2968}/I_{3085}$, is used. A laminated metal sheet for containers that is excellent in terms of formability even after heat treatment can be obtained by controlling this intensity ratio so as to be within a specific range.

The present invention is summarized as follows:

[1] A laminated metal sheet for containers, the laminated metal sheet including a metal sheet and a laminate layer that covers at least one side of the metal sheet,

the laminate layer including a single layer containing 50% by mass or more of polyester or a plurality of layers containing 50% by mass or more of the polyester,

an intensity ratio $I_{2968}/I_{3085}$ of a Raman band intensity ($I_{2968}$) at a peak top position around 2,968 cm$^{-1}$ to a Raman band intensity ($I_{3085}$) at a peak top position around 3,085 cm$^{-1}$ being a range of 0.3 to 0.9, the Raman band intensity ($I_{2968}$) and the Raman band intensity ($I_{3085}$) being determined by a laser Raman method on a surface of the laminate layer;

characterised in that:

the intensity ratio $I_{2968}/I_{3085}$ refers to the surface of the laminate layer before a heat treatment, and in that:

when an entire thicknesswise cross section of the laminate layer is irradiated with linearly polarized laser light in a direction perpendicular to the cross section of the laminate layer, the Raman band intensity ratio $I_{2968}/I_{3085}$ before the heat treatment is within a range of 0.7 to 1.5.

[2] The laminated metal sheet for containers according to [1], wherein an amount of change in the Raman band intensity ratio $I_{2968}/I_{3085}$ before and after the heat treatment is 0.4 or less, when the laminated metal sheet for containers is subjected to heat treatment in a temperature range of 160 to 210°C for 20 minutes, the Raman band intensity ratio $I_{2968}/I_{3085}$ determined by irradiating the entire thicknesswise cross section of the laminate layer with the linearly polarized laser light in the direction perpendicular to the cross section of the laminate layer.

[3] The laminated metal sheet for containers according to [1] or [2], in which the laminate layer includes a top layer, an intermediate layer, and a steel sheet-adhesion layer that are stacked on one another, and the intermediate layer contains 5 PHR or more and 30 PHR or less of a white pigment.

[4] The laminated metal sheet for containers according to [3], in which each of the top layer and the steel sheet-adhesion layer contains 2 PHR or less of the white pigment.

[5] The laminated metal sheet for containers according to [3] or [4], in which the white pigment is titanium dioxide or barium sulfate.

[6] The laminated metal sheet for containers according to any one of [1] to [5], in which the laminate layer is formed on a side that later becomes an inner side of a container, and the polyester contained in the laminate layer contains at least 80% by mole of an ethylene terephthalate unit.

[7] The laminated metal sheet for containers according to any one of [1] to [5], in which the laminate layer is formed on a side that later becomes an outer side of a container, the laminate layer is composed mainly of the polyester, the sum of the content of an ethylene terephthalate unit contained in the polyester and the content of a butylene terephthalate unit contained in the polyester is 80% by mole or more, and the polyester has a glass transition temperature (Tg) of 20 to 100°C.

[8] A method for producing a metal can, the method including: a printing step of adhering an ink to the laminate layer of a laminated metal sheet for containers and then heat-drying the adhered ink, the laminate layer being formed on a surface of the laminated metal sheet; and, after the printing step, a can manufacturing step of subjecting the laminated metal sheet for containers to can manufacturing processing; characterised in that: the laminated metal sheet is the laminated metal sheet according to any one of the above [1] to [7].

[9] A metal sheet formability evaluation method for evaluating formability of a laminated metal sheet for containers after heat treatment, the laminated metal sheet for containers including a metal sheet and a laminate layer that covers at least one side of the metal sheet, the laminate layer including a single layer composed mainly of polyester or a plurality of layers composed mainly of the polyester, the method including: a first step of determining, on a surface of the laminate layer, a Raman band intensity ($I_{2968}$) at a peak top position around 2,968 cm$^{-1}$ and a Raman band intensity ($I_{3085}$) at a peak top position around 3,085 cm$^{-1}$ by a laser Raman method and then deriving an intensity ratio $I_{2968}/I_{3085}$; characterised in that:

the first step is performed before the heat treatment; and in that the method further comprises: a second step of, when an entire thicknesswise cross section of the laminate layer before the heat treatment is irradiated with linearly polarized laser light in a direction perpendicular to the cross section of the laminate layer, deriving the Raman band intensity ratio $I_{2968}/I_{3085}$; and a third step of evaluating the formability of the laminated metal sheet for containers as good when the intensity ratio $I_{2968}/I_{3085}$ derived in the first step is within the range of 0.3 to 0.9 and the intensity ratio $I_{2968}/I_{3085}$ derived in the second step is within the range of 0.7 to 1.5.

Advantageous Effects of Invention

The laminated metal sheet for containers according to the present invention is excellent in corrosion resistance, adhesiveness, and impact resistance after printing treatment and is suitable for container materials to be subjected to drawing etc. and particularly for food can container materials.

According to the method for producing a metal can according to the present invention, the metal can is able to be produced by, for example, printing on a surface of a flat metal sheet and then subjecting the metal sheet with the printed surface to can manufacturing processing. To print on the surface of the flat metal sheet is easier than to print on a formed metal can. Therefore, the metal can is able to be produced easily.

According to the method for evaluating a laminated metal sheet for containers according to the present invention, the formability of the metal sheet after heat treatment can be accurately evaluated.

Description of Embodiments

The present invention will next be described in detail. However, the present invention is not limited to the following embodiments.

The present invention provides a laminated metal sheet for containers that includes a metal sheet and a laminate layer composed mainly of polyester and formed on at least one side of the metal sheet. The laminate layer composed mainly of polyester has configurations described below. First, the reason that the laminate layer composed mainly of polyester and having the following (Configuration 1) and (Configuration 2) is used will be described.

(Configuration 1)

Before a heat treatment, on a surface of the laminate layer, the intensity ratio of a Raman band intensity ($I_{2968}$) at a peak top position around 2,968 cm$^{-1}$ to a Raman band intensity ($I_{3085}$) at a peak top position around 3,085 cm$^{-1}$ that are determined by a laser Raman method, i.e., $I_{2968}/I_{3085}$, is within the range of 0.3 to 0.9.

(Configuration 2)

When an entire thicknesswise cross section of the laminate layer is irradiated with linearly polarized laser light in a direction perpendicular to the cross section of the laminate layer, the Raman band intensity ratio $I_{2968}/I_{3085}$ before the heat treatment is within the range of 0.7 to 1.5.

The present inventors have conducted various studies on the formability of a laminated metal sheet for containers after heat treatment and found that the reason that the formability of the laminate layer after the heat treatment deteriorates is that the heat treatment causes thermal crystallization of the polyester to proceed significantly on the surface of the laminate layer and in the direction of the thickness of its cross section.

In the film after lamination, the crystalline content is highest on the surface of the laminate layer. On the surface of the laminate layer, the crystals are oriented parallel to the surface. When the laminate layer is subjected to heat treatment, crystal growth occurs with these crystals serving as nuclei, and therefore the amount of crystals produced thermally depends on the crystalline content before the heat treatment and increases as the crystalline content increases. Therefore, on the surface of the laminate layer, thermal crystallization is more likely to proceed, and the formability is more likely to deteriorate.

In the direction of the thickness of the cross section of the laminate layer, almost all of the molecular chains are not oriented, and therefore the crystalline content is low. This is because almost all of the polyester molecular chains are oriented parallel to the surface of the laminate layer. The method for forming the laminate layer is not particularly limited to lamination of the film, direct lamination, etc. The above phenomenon occurs particularly significantly when the laminate layer is formed from a polyester film produced by biaxial stretching, i.e., horizontal and vertical stretching. In regions with a small crystalline content, isotropic crystal growth tends to occur, and a brittle spherulite structure tends to be formed. Although the amount of crystals generated by heat is small, embrittlement occurs locally, so that the formability of the metal sheet tends to deteriorate. It is necessary that the amount of spherulites after heat treatment be restrained to a prescribed amount or less.

Accordingly, in order to improve the formability of the laminated metal sheet for containers after heat treatment, it is very important to control the crystalline content and amorphous content on the surface of the laminate layer before heat treatment and to control the crystalline content and amorphous content in a thicknesswise cross section of the laminate layer.

One effective analysis method for measuring the crystalline content and amorphous content in a specific portion of the laminate layer is laser Raman spectroscopy. The Raman band intensity ($I_{2986}$) at a peak top position around 2,986 cm$^{-1}$ measured by laser Raman spectroscopy reflects the arrangement of C-H bonds in a diol component in polyester molecular chains. When this intensity is large relative to the Raman band intensity ($I_{3085}$), the arrangement of the polyester polymer chains in the measurement area is relatively close to a disordered arrangement, and many amorphous portions may be present. The Raman band intensity ($I_{3085}$) at a peak top position around 3,085 cm$^{-1}$ measured by laser Raman spectroscopy reflects the arrangement of C-H bonds in benzene rings in the polyester skeleton. When this intensity is large relative to the Raman band intensity ($I_{2986}$), many aromatic ring such as benzene rings are arranged, and many crystalline portions may be present.

Therefore, the intensity ratio between these parameters ($I_{2986}/I_{3085}$) is an indicator representing the balance between the crystalline content and amorphous content in the laminate layer. Detailed studies have been conducted on this indicator, and it has been found that there is a close relation between this intensity ratio and the behavior of thermal crystallization of the polyester. Specifically, it has been found that, by controlling the intensity ratio between these parameters ($I_{2986}/I_{3085}$) of the laminate layer before heat treatment within a certain range, excellent formability can be achieved even after the heat treatment. The present invention is based on this new finding.

A description will next be given of the numerical ranges of the intensity ratio. As described above in (Configuration 1), in the laminated metal sheet for containers, the intensity ratio of the Raman band intensity at the peak top position around 2,968 cm$^{-1}$ to the Raman band intensity at the peak top position around 3,085 cm$^{-1}$ that are determined by the laser Raman spectroscopy on the surface of the laminate layer not subjected to heat treatment is defined as being within the range of 0.3 to 0.9.

If the intensity ratio of the Raman band intensity around 2,968 cm$^{-1}$ to the Raman band intensity around 3,085 cm$^{-1}$ is less than 0.3, the amount of crystals oriented on the surface of the laminate layer is excessively high. In this case, significant crystal growth occurs during heat treatment, so that the formability of the metal sheet deteriorates. Therefore, rupture, breakage, etc. of the film may occur in the subsequent can manufacturing process. If the intensity ratio exceeds 0.9, the amount of crystals oriented on the surface of the laminate layer is excessively small, and this causes deterioration of the strength and corrosion resistance of the film. Moreover, isotropic crystal growth occurs. In this case, a brittle spherulite structure tends to be formed, causing deterioration of the formability after heat treatment. Therefore, the intensity ratio is within the range of 0.3 to 0.9, preferably within the range of 0.4 to 0.8, and more preferably within the range of 0.5 to 0.7. This allows excellent formability to be achieved even after heat treatment and the characteristics required for food cans to be satisfied.

In (Configuration 1), no particular limitation is imposed on the conditions for analysis of the surface of the laminate layer, which is the area for the measurement of the Raman band intensities. In ordinary surface analysis, it is preferable that the information about a portion extending about 2 μm in the direction of thickness is reflected.

A description will next be given of (Configuration 2). As described above in (Configuration 2), in the thicknesswise cross section of the laminate layer not subjected to heat treatment, the intensity ratio of the Raman band intensity around 2,968 cm$^{-1}$ to the Raman band intensity around 3,085 cm$^{-1}$ that are determined by the laser Raman spectroscopy using the linearly polarized laser light is within the range of 0.7 to 1.5. In this case, the plane of polarization of the linearly polarized light is parallel to the direction of the thickness of the laminate layer, i.e., perpendicular to the cross section of the laminate layer. If the intensity ratio between the Raman band intensities is less than 0.7, the amount of an isotropic crystalline component that facilitates growth of spherulites is excessive, and this causes deterioration of the formability of the polyester film after heat treatment. If the intensity ratio exceeds 1.5, the crystalline content in the film is excessively small, and this results in deterioration of the strength and corrosion resistance of the film. Therefore, the characteristics required for food cans are not satisfied. When the intensity ratio is within the range of 0.7 to 1.5 and preferably within the range of 0.9 to 1.3, excellent formability is achieved even after heat treatment, and the characteristics required for food cans can be satisfied.

In (Configuration 2), the cross section of the film that is the area for the measurement of the Raman band intensities is the entire area extending from the surface of the film to the contact surface between the film and the steel sheet.

In the present invention, it is preferable that the Raman band intensity ratio $I_{2968}/I_{3085}$ determined by irradiating the cross section of the laminate layer with linearly polarized laser light in a direction perpendicular to the cross section of the laminate layer is such that the amount of change in the Raman band intensity ratio $I_{2968}/I_{3085}$ before and after heat treatment is 0.4 or less. When the amount of change before and after the heat treatment is 0.4 or less, the amount of spherulites generated during the heat treatment is sufficiently small, and the polyester film has excellent formability, so that almost no rupture, breakage, etc. of the film occur in the subsequent can manufacturing process. When the amount of change is 0.4 or less, the laminated metal sheet for containers can maintain excellent formability even after the heat treatment and is therefore applicable to DR cans. The above heat treatment refers to heat treatment performed at a heating temperature of 160°C to 210°C for a heating time of 10 to 30 minutes using a method generally used in a can manufacturer, e.g., using a hot air drying furnace. Short-time heating performed during lamination is not included in the above heat treatment.

The above fact that crystallization of the polyester is less likely to proceed can be confirmed also from the evaluation of formability and evaluation of adhesion after forming described in EXAMPLES. Specifically, a good result of evaluation for formability indicates that the film resists damage during processing. This indirectly indicates that the film is flexible enough for the processing, i.e., the degree of crystallization of the polyester is lower than that of conventional products and therefore the formability does not deteriorate. A good result of evaluation for adhesiveness after forming indicates that the metal sheet and the polyester film are bonded to each other with high adhesion. This indirectly indicates that the polyester film can follow the processing such as bending, i.e., the degree of crystallization of the polyester is lower than that of conventional products and therefore the formability does not deteriorate.

The intensity ratio of the Raman band intensity around 2,968 cm$^{-1}$ to the Raman band intensity around 3,085 cm$^{-1}$ that are determined by the laser Raman spectroscopy can be controlled using lamination conditions when the polyester film is laminated to the metal sheet. Specifically, the intensity ratio can be controlled within a desired range by controlling the time of contact between the polyester film and the metal sheet having a temperature equal to or higher than the melting point of the polyester during lamination and controlling the temperature of a lamination roller for laminating the polyester film to the metal sheet.

The time of contact between the polyester film and the metal sheet having a temperature equal to or higher than the melting point of the polyester and the temperature of the lamination roller may be controlled such that the intensity ratio falls within the desired range. Specific preferred conditions will be described later.

The ratio of Raman band intensities by the laser Raman spectroscopy can be determined by a method described later in EXAMPLES.

Next, the laminate layer used in the present invention will be described. The laminate layer may be formed on the outer side of a container or may be formed on the inner side of the container. Specifically, the laminate layer may be formed on at least one side of the metal sheet described later.

Basically, there is no difference between the laminate layer formed on the outer side of a container and the laminate layer formed on the inner side of a container. Specifically, in any of these laminate layers, the intensity ratio satisfies the above described (Configuration 1) and (Configuration 2). However, in a preferred embodiment, the laminate layer formed on the outer side of a container and the laminate layer formed on the inner side of the container are slightly different from each other. Common points and different points between the laminate layer formed on the outer side of the container and the laminate layer formed on the inner side of the container will be clarified and described from the material point of view.

The laminate layer used in the present invention may be formed on the outer side of a container or on the inner side of the container. In either case, it is preferable that the laminate layer is a biaxially stretched polyester film. This is because the use of the biaxially stretched polyester film provides effects such as uniformity in the thickness and shape of the film and stability of the physical properties of the film.

Preferably, both the laminate layer formed on the outer side of a container and the laminate layer formed on the inner side of the container contain polyester as a main component. The "main component" means that a resin in the laminate layer contains 50% by mass or more of the polyester.

It is preferable from the viewpoint of the required performance such as heat resistance, corrosion resistance, and taste characteristics that the polyester used as the main component of the resin in the laminate layer formed on the inner side of a container is a polyester including an ethylene terephthalate unit as a main component. Specifically, it is preferable that the content of the ethylene terephthalate unit in polyester units forming the polyester is at least 80 mol% (hereinafter, the "mol%" representing the content of a repeating unit in the resin may be denoted by "%"). In this case, particularly high heat resistance, corrosion resistance, and taste characteristics can be obtained. If the content of the ethylene terephthalate unit is less than 80 mol%, the crystallinity of the film may deteriorate, or the above-described characteristics may deteriorate.

In the polyester used as the main component of the resin in the laminate layer formed on the outer side of a container, it is preferable, in terms of formability, that the sum of the content of the ethylene terephthalate unit and the content of a butylene terephthalate unit is 80% or more. Particularly, from the viewpoint of retort discoloration resistance, it is preferable that the content of the butylene terephthalate unit in the polyester units is 45 to 65%. When the ratio of the butylene terephthalate unit is 45% or more, the retort discoloration resistance becomes particularly excellent. When the ratio of the butylene terephthalate unit is 65% or less, the formability of the film becomes particularly excellent. Preferably, the polyester units include only the ethylene terephthalate unit in addition to the butylene terephthalate unit.

The polyester contained in the laminate layer used on the inner side of a container may include a copolymer of another dicarboxylic acid component and another glycol component, so long as heat resistance and taste characteristics, in particular, are not impaired. The polyester contained in the laminate layer used on the outer side of a container may include a copolymer of another dicarboxylic acid component and another glycol component, so long as shock resistance, in particular, is not impaired.

Examples of the dicarboxylic acid component other than terephthalic acid include: aromatic dicarboxylic acids such as isophthalic acid, naphthalene dicarboxylic acid, diphenyl dicarboxylic acid, diphenylsulfone dicarboxylic acid, diphenoxyethane dicarboxylic acid, 5 sodium sulfoisophthalic acid, and phthalic acid; aliphatic dicarboxylic acids such as oxalic acid, succinic acid, adipic acid, sebacic acid, dimer acid, maleic acid, and fumaric acid; alicyclic carboxylic acids such as cyclohexane dicarboxylic acid; and oxycarboxylic acids such as p-oxybenzoic acid. One, two or more dicarboxylic acid components may be used.

Examples of the glycol component other than ethylene glycol include: aliphatic glycols such as propanediol, butanediol, pentanediol, hexanediol, and neopentyl glycol; alicyclic glycols such as cyclohexanedimethanol; aromatic glycols such as bisphenol A and bisphenol S; and diethylene glycol. One, two or more glycol components may be used.

The polyester may contain a repeating unit derived from a polyfunctional compound such as trimellitic acid, trimesic acid, or trimethylolpropane or another commonly used monomer, so long as the effects of the present invention are not impaired.

Among the above-described compounds other than terephthalic acid and ethylene glycol, isophthalic acid is a compound that inhibits the linearity of a polymer chain (a compound that imparts a bent structure to the polymer chain), and the use of isophthalic acid allows the polyester to resist crystallization.

In the present invention, a mixture of two or more of the above-described polymers may be used. A polymer other than these polyesters may be mixed. If necessary, an antioxidant, a thermal stabilizer, an ultraviolet absorber, a plasticizer, a pigment, an antistatic agent, a crystal nucleating agent, etc. may be added. Preferably, in the present invention, a white pigment is added, as described below.

The use of the polyester film containing the white pigment added thereto can provide DR cans highly flexible in design. The addition of the white pigment can hide the metallic luster of an underlayer and improve the clearness of the printed surface, so that a good appearance can be obtained. The white pigment used is preferably an inorganic pigment such as titanium dioxide or barium sulfate. These white pigments are preferred because they have high tinting strength and high spreadability and because high flexibility in design can be ensured even after the formation of a container. Particularly, titanium dioxide is used preferably. As described above, the white pigment is added from the viewpoint of flexibility in design. Therefore, it is preferably to form the polyester film containing the white pigment on the outer side of a container. However, this polyester film may be formed on the inner side of a container.

When the white pigment is added to the polyester film, it is preferable that the polyester film includes a top layer, an intermediate layer, and a steel sheet-adhesion layer that are stacked in this order and the intermediate layer contains 5 to 30 PHR of the white pigment.

No particular limitation is imposed on the thickness of the top layer. Generally, the thickness of the top layer, i.e., its dimension from a surface of the polyester film in the direction of the thickness, is 2 to 5 $\mu$m. No particular limitation is imposed on the thickness of the intermediate layer. Generally, the intermediate layer has a thickness of 8 to 15 $\mu$m. No particular limitation is imposed on the thickness of the steel sheet-adhesion layer. Generally, the steel sheet-adhesion layer has a thickness of 2 to 5 $\mu$m.

When the content of the white pigment is 5 PHR or more, whiteness and the ability to hide the underlayer metal are particularly improved, so that the polyester film can function as a substrate for printing sufficiently. When the content of the white pigment is 30 PHR or less, the white pigment hardly inhibits deformation of the film during can manufacturing processing, and there is almost no possibility that rupture of the film and film defects will occur.

In the present invention, from the viewpoint of further improving the flexibility in design, it is preferable to add the white pigment also to the top layer and the steel sheet-adhesion layer. In the top layer and the steel sheet-adhesion layer, the content of the white pigment is preferably 2 PHR or less. When the content of the white pigment in the top layer is 2 PHR or less, almost no white pigment is exposed locally on the surface of the film, so that there is almost no possibility that the deformation of the materials during can manufacturing processing will be inhibited. When the content of the white pigment in the steel sheet-adhesion layer is 2 PHR or less, almost no white pigment is exposed, so that there is almost no possibility that the adhesion between the steel sheet and the film will be inhibited. No particular limitation is imposed on the lower limit of the content of the white pigment in the top layer and the steel sheet-adhesion layer, because the lower limit varies depending on the desired flexibility in design and the type of the white pigment.

Next, the physical properties of the polyester, which is the main component of the resin in the laminate layer, will be described. Both the laminate layer formed on the outer side of a container and the laminate layer formed on the inner side of a container have requirement for their mechanical properties and laminatability. To improve the mechanical properties and laminatability of the laminate layers, the intrinsic viscosity of the polyester is preferably 0.50 dl/g or more, more preferably 0.60 dl/g or more, and particularly preferably 0.63 dl/g or more. No particular limitation is imposed on the upper limit of the intrinsic viscosity, but the intrinsic viscosity may be 0.9 dl/g or less. When the intrinsic viscosity is within the above range, the taste characteristics of the laminate layer is also improved. From the viewpoint of improvement in the taste characteristics, it is particularly preferable that the polyester used as the main component of the resin in the laminate layer formed on the inner side of a container has the intrinsic viscosity described above.

The glass transition temperature (Tg) of the polyester contained in the laminate layer that later becomes the outer side of a container is desirably 20 to 100°C. A more preferred range of the glass transition temperature is 20 to 73°C. The glass transition temperature is preferably 20°C or higher because heat resistance during heat treatment such as retort treatment becomes very high. The glass transition temperature is preferably 100°C or lower because impact resistance becomes very high. The glass transition temperature can be measured using any of various methods commonly used. For example, the glass transition temperature can be measured by a method using a differential scanning calorimeter (DSC).

No particular limitation is imposed on the thickness of the laminate layer formed on the outer side of a container and also on the thickness of the laminate layer formed on the inner side of a container. However, in terms of formability after lamination to the metal sheet, the coatability to the metal sheet, impact resistance, and taste characteristics, the above thicknesses are preferably 3 to 50 $\mu$m and more preferably 8 to 30 $\mu$m.

A production method for laminating the laminate layer to the metal sheet will next be described. In the present invention, no limitation is imposed on the method for forming the laminate layer. In the present invention, it is preferable to use a method including: heating the metal sheet at a temperature higher than the melting point of the formed laminate film; and bring the film into contact with at least one side of the metal sheet using a thermocompression roller (which may be herein referred to as a "lamination roll") to thereby heat fuse the film onto the metal sheet.

The lamination conditions needs to be such that the laminate layer structure defined in the present invention (the structure satisfying the above described (Configuration 1) and (Configuration 2)) is obtained. The desired laminate film structure can be achieved by, as described above, controlling the time of contact between the laminate film and the metal sheet having a temperature equal to or higher than the melting point of the polyester and controlling the temperature of the lamination roller.

The time of contact between the laminate film and the metal sheet having a temperature equal to or higher than the melting point of the polyester is preferably 5.0 to 15.0 msec. The time of contact is more preferably 6.5 to 14.0 msec and most preferably 7.0 to 13.0 msec.

Preferably, the temperature of the lamination roller is controlled within the range of from the glass transition temperature of the polyester to the crystallization temperature of the polyester or lower. The temperature of the lamination roller is more preferably 65 to 135°C and most preferably 70 to 130°C. By controlling the temperature of the lamination roller within the range of from the glass transition temperature of the polyester to the crystallization temperature of the polyester or lower, the amount of crystals oriented on the surface of the laminate layer and the amount of crystals oriented in the cross section of the laminate layer can be controlled within the ranges defined in the present invention.

The pressurization conditions during lamination are not particularly defined. However, the contact pressure is preferably 9.8 to 294 N/cm$^2$. When the contact pressure is equal to or higher than the lower limit, the laminate film can be fused sufficiently, and sufficient adhesion can be obtained. Even when the pressure applied is high, the high pressure does not adversely affect the performance of the laminated metal sheet, but the force acting on the lamination roller is large. In this case, the strength of the facility needs to be high, and a large-scale apparatus is required. This is economically disadvantageous.

Next, the metal sheet will be described. The metal sheet used may be an aluminum sheet, a steel sheet, etc. that are widely used as can materials. Particularly, for example, a surface-treated steel (so-called TFS) sheet including a two-layer coating formed from a metallic chromium lower layer and a chromium hydroxide upper layer is most suitable.

No particular limitation is imposed on the amount of the deposited metallic chromium layer in the TFS and on the amount of the deposited chromium hydroxide layer in the TFS. From the viewpoint of adhesion after processing and corrosion resistance, the amount of the metallic chromium layer is desirably 70 to 200 mg/m$^2$ in terms of Cr, and the amount of the chromium hydroxide layer is desirably 10 to 30 mg/m$^2$ in terms of Cr.

Next, the metal can production method of the present invention will be described. The metal can production method of the present invention includes a printing step and a can manufacturing step. These steps will next be described.

The printing step is the step of adhering an ink to a laminate layer formed on a surface of a laminated metal sheet for containers and heat-drying the ink adhering to the laminate layer. No particular limitation is imposed on the type of the ink used in the printing step. No particular limitation is imposed on the printing method, and any of general printing methods such as gravure printing, flexography, and offset printing may be used.

No particular limitation is imposed on the "heat-drying." A high heating temperature is preferred because the heat drying can proceed efficiently. When a conventional polyester film-laminated metal sheet is heated at a temperature equal to or higher than the glass transition temperature of the polyester, crystallization of the polyester contained in the polyester film on the surface of the metal sheet proceeds significantly, and this cause significant deterioration of the formability of the polyester film-laminated metal sheet. However, in the present invention, the laminate layer satisfies the above-described (Configuration 1) and (Configuration 2). Therefore, even when the laminate layer is heated at a temperature equal to or higher than the glass transition temperature, crystallization does not proceed, unlike in the conventional polyester film. Therefore, even after heat treatment such as heat drying, almost no deterioration of the formability of the laminated metal sheet for containers occurs. The temperature for drying the ink is generally 160°C to 210°C. In the present invention, even at such a high temperature, the crystallization of the polyester in the film is less likely to proceed, and the formability is hardly influenced. Specifically, in the present invention, even when heating is performed at a heating temperature of 300°C or lower and a heating time of 30 minutes or shorter, the formability is hardly impaired.

The can manufacturing step is the step of subjecting the laminated metal sheet for containers that has been subjected to the printing step to can manufacturing processing. No particular limitation is imposed on the can manufacturing processing, and any previously known processing method such as drawing-redrawing, bending-stretching (stretching) by drawing and redrawing, bending-stretching-ironing by drawing and redrawing, or drawing-ironing can be used.

As described above, in the present invention, no deterioration of the formability of the laminate layer occur even after the printing step, unlike in the conventional case. Therefore, a problem such as cracking and breakage of the laminate layer during the can manufacturing processing is much less likely to occur, so that printing can be performed on a flat surface before the can manufacturing processing. According to the present invention, a metal can is able to be produced easily.

Next, the metal sheet formability evaluation method of the present invention will be described. The evaluation method of the present invention includes the following first to third steps.

(First step) The step of determining, on a surface of the laminate layer before heat treatment, a Raman band intensity ($I_{2968}$) at a peak top position around 2,968 cm$^{-1}$ and a Raman band intensity ($I_{3085}$) at a peak top position around 3,085 cm$^{-1}$ by a laser Raman method and then deriving an intensity ratio $I_{2968}/I_{3085}$.
(Second step) The step of, when an entire thicknesswise cross section of the laminate layer before the heat treatment is irradiated with linearly polarized laser light in a direction perpendicular to the film cross section, deriving the Raman band intensity ratio $I_{2968}/I_{3085}$.
(Third step) The step of evaluating the formability of the laminated metal sheet for containers using the intensity ratio $I_{2968}/I_{3085}$ derived in the first step and the intensity ratio $I_{2968}/I_{3085}$ derived in the second step.

The present invention has been completed on the basis of the above-described findings. Specifically, the formability of the laminated metal sheet for containers is good when the Raman band intensity ($I_{2968}$) at the peat top position around 2,968 cm$^{-1}$ and the Raman band intensity ($I_{3085}$) at the peak top position around 3,085 cm$^{-1}$ determined on the surface of the laminate layer before heat treatment by the laser Raman method are such that the intensity ratio $I_{2968}/I_{3085}$ is within a prescribed range and when the Raman band intensity ratio $I_{2968}/I_{3085}$ determined by irradiating the entire thicknesswise cross section of the laminate layer before the heat treatment with linearly polarized laser light in a direction perpendicular to the film cross section is within a prescribed range.

By using the relation between the above-described intensity ratios and formability, the formability of the laminated metal sheet for containers can be evaluated.

One method for evaluating the formability using the above-described intensity ratios is as follows. A determination is made as to whether or not the intensity ratio $I_{2968}/I_{3085}$ of the Raman band intensity ($I_{2968}$) at the peak top position around 2,968 cm$^{-1}$ to the Raman band intensity ($I_{3085}$) at the peak top position around 3,085 cm$^{-1}$ that are determined on the surface of the laminate layer before the heat treatment by the laser Raman method is within the range of 0.3 to 0.9 as described above. Then a determination is made as to whether or not the Raman band intensity ratio $I_{2968}/I_{3085}$ determined by irradiating the entire thicknesswise cross section of the laminate layer before the heat treatment with the linearly polarized laser light in the direction perpendicular to the cross section of the laminate layer is within the range of 0.7 to 1.5.

No particular limitation is imposed on the heat treatment so long as the laminated metal sheet for containers is exposed to a high-temperature environment. Examples of the heat treatment include treatment for heat-drying the printed surface of the laminate layer. The evaluation method of the present invention is characterized in that the formability after the laminated metal sheet is heated under the conditions under which the polyester contained in the laminate layer is crystallized can be evaluated. Therefore, it is preferable that the heating temperature is equal to or higher than the glass transition temperature of the polyester. The evaluation method of the present invention can make an evaluation without any problem even when the heating temperature is high, i.e., 160°C to 210°C.

EXAMPLE 1

EXAMPLES of the present invention will next be described. However, the present invention is not limited to the following EXAMPLES.

Production of metal sheet

A chromium-coated steel sheet was used as the metal sheet. A steel sheet having a thickness of 0.18 mm and a width of 977 mm and subjected to cold rolling, annealing, and temper rolling was subjected to degreasing, pickling, and then chromium plating treatment to produce a chromium-coated steel sheet. In the chromium plating treatment, chromium plating was performed in a chromium plating bath containing $CrO_3$, $F^-$, and $SO_4^{2-}$, followed by intermediate rinsing and electrolysis in a chemical conversion treatment solution containing $CrO_3$ and $F^-$. In this case, the electrolysis conditions (such as electric current density and the quantity of electricity) were controlled to thereby control the amount of deposited metallic chromium and the amount of deposited chromium hydroxide to 120 mg/m$^2$ and 15 mg/m$^2$ in terms of Cr, respectively.

Next, a metal sheet laminator was used to heat the above-obtained chromium-coated steel sheet on a metal sheet heater, and laminate films were laminated (heat-fused) to opposite sides of the chromium-coated steel sheet using a lamination roller to thereby produce a laminated metal sheet (see TABLE 1 (TABLE 1-1 and TABLE 1-2 are collectively referred to as TABLE 1) and TABLE 2 (TABLE 2-1 and TABLE 2-2 are collectively referred to as TABLE 2) for the details of the components of the laminate films). The lamination roller was of an internal water cooling type, and the laminate film was cooled by forced circulation of the cooling water during lamination. The Raman band intensity ratio by laser Raman method was controlled by changing the conditions for lamination to the metal sheet. The details of the laminated films and the lamination conditions are shown in TABLE 3. A numeric value in parentheses in each dicarboxylic acid component in the column of polyester composition in TABLES 1 and 2 represents the ratio (%) of the dicarboxylic acid used to the total carboxylic acid amount. The same applies to the glycol component. Each of adhesion layers in TABLES 1 and 2 is a steel-sheet adhesion layer. In a reaction, the whole amounts of raw materials, i.e., dicarboxylic acid and glycol were used.

Intrinsic viscosity (IV) of polyester

The intrinsic viscosity of each polyester was measured. The results of the measurement are shown in TABLES 1 and 2. A specific method for the measurement is as follows. The intrinsic viscosity was measured using a method described in JIS K 7367-5. Specifically, the intrinsic viscosity was measured in ortho-chlorphenol at 35°C at a concentration of 0.005 g/ml and determined using a formula: intrinsic viscosity = $(T-T_0)/(T_0 \times c)$. Here, c is the concentration of the resin in grams per 100 ml of the solution, and $T_0$ and T represent the time of flow of the solvent and the time of flow of the resin solution through a capillary viscometer, respectively.

Crystallization melting point of polyester

The crystallization melting point of each polyester was measured. The results of the measurement are shown in TABLES 1 and 2. A specific method for the measurement is as follows. A differential scanning calorimeter was used to heat a polyester film before lamination from room temperature to 290°C at a temperature increase rate of 10°C/min, and an endothermic peak observed during this procedure was measured. The peak temperature of the endothermic peak measured in the range of 200 to 280°C was used as the melting point of the polyester.

Crystallization temperature of polyester

The crystallization temperature of each polyester was measured. The results of the measurement are shown in TABLES 1 and 2. A specific method for the measurement is as follows. A polyester film was peeled from a laminated metal sheet using diluted hydrochloric acid, then washed sufficiently with distilled water, and dried. Then a differential scanning calorimeter was used to heat the polyester film from -50°C to 290°C at a temperature increase rate of 10°C/min, and an exothermic peak and an endothermic peak observed during this procedure were measured. The peak temperature of the exothermic peak observed in the range of 100 to 200°C was used as the crystallization temperature of the polyester.
Each film after lamination was analyzed using the following methods (1) to (3). The characteristics of each laminated metal sheet were measured and evaluated using the following methods (4) to (6). The results are shown in TABLES 1 to 4.

(1) Raman band intensity ratio (R) on surface of film before heat treatment

The Raman spectrum of the Raman band intensity at the peak top position around 3,085 cm$^{-1}$ and the Raman spectrum of the Raman band intensity at the peak top position around 2,968 cm$^{-1}$ were measured for each laminated metal sheet by laser Raman, and the Raman band intensity ratio (R) was determined using formula (1) below. The peaks at 3,085 cm$^{-1}$ and 2,968 cm$^{-1}$ may shift slightly due to a copolymerization component, etc. However, the Raman band intensities at peak top positions of peaks containing the above wavenumbers are used.

$$R = I_{2968}/I_{3085} \qquad (1)$$

$I_{2968}$: Raman band intensity at peak top position around 2, 968 cm$^{-1}$
$I_{3085}$: Raman band intensity at peak top position around 3, 085 cm$^{-1}$

<Measurement conditions>

- Excitation light source: Ar laser ($\lambda$ = 514.5 nm), power: 2 mW
- Magnification: ×100
- Laser light is directed such that the polarization plane of the laser light is parallel to the lengthwise direction of the laminated metal sheet.

(2) Raman band intensity ratio (R) in entire thicknesswise cross section of laminate layer before heat treatment

A cross section of a laminated metal sheet was buffed. Then the Raman spectrum of the Raman band intensity at the peak top position around 3,085 cm$^{-1}$ and the Raman spectrum of the Raman band intensity at the peak top position around 2,968 cm$^{-1}$ by laser Ramen were measured by laser Raman spectroscopy using linearly polarized laser light under the conditions in which the direction of polarization was parallel to the direction of the film thickness, and the Raman band intensity ratio (R) was determined using formula (1). The measurement was performed in the thickness direction of the laminate layer at 1 $\mu$m intervals, and the average value was determined and used as the Raman band intensity ratio in the cross section of the laminate layer.

<Measurement conditions>

- Excitation light source: Ar laser ($\lambda$ = 514.5 nm), power: 2 mW
- Magnification: $\times$100

(3) Raman band intensity ratio (R) in cross section of laminate layer after heat treatment

Distortion printing was performed on a laminated metal sheet, and the printed laminated metal sheet was subjected to baking treatment at 185°C for 10 minutes. Then the resultant laminated metal sheet was coated with a finishing varnish and subjected to baking treatment at 210°C for 10 minutes. A cross section of the obtained sample after heat treatment was buffed. Then the Raman spectrum of the Raman band intensity at the peak top position around 3,085 cm$^{-1}$ and the Raman spectrum of the Raman band intensity at the peak top position around 2,968 cm$^{-1}$ by laser Ramen were measured by laser Raman spectroscopy using linearly polarized laser light under the conditions in which the direction of polarization was parallel to the direction of the thickness of the laminate layer, and the Raman band intensity ratio (R) was determined using formula (1). The measurement was performed in the direction of the film thickness at 1 $\mu$m intervals, and the average value was determined and used as the Raman band intensity ratio in the film cross section.

<Measurement conditions>

- Excitation light source: Ar laser ($\lambda$ = 514.5 nm), power: 2 mW
- Magnification: $\times$100

(4) Glass transition temperature of polyester

A laminate layer was completely melted at 290°C and quenched into liquid nitrogen to prepare a sample. This sample was subjected to measurement using a differential scanning calorimeter (DSC Q100 manufactured by TA Instruments) at a temperature increase rate of 10°C/min.

(5) Formability

Distortion printing was performed on a laminated metal sheet, and the printed laminated metal sheet was subjected to baking treatment at 185°C for 10 minutes. Then the resultant laminated metal sheet was coated with a finishing varnish and subjected to baking treatment at 210°C for 10 minutes. A wax was applied to the obtained sample, and a disk having a diameter of 200 mm was punched and drawn at a drawing ratio of 2.00 to obtain a shallow drawn can. This drawn cup was redrawn at a drawing ratio of 2.50. Then the resultant can was subjected to doming according to a routine procedure and then to trimming and neck-in flanging to thereby form a deep drawn can. Attention was given to a neck-in portion of the above-obtained deep drawn can, and the degree of damage to the film was visually inspected. The inner and outer surfaces of the can were evaluated.

(Evaluation criteria)

EXCELLENT: No damage and no whitening were found in the laminate layer after forming.
GOOD: No damage was found in the laminate layer after forming, but partial whitening was found.
POOR: The can body was broken, and a can could not be formed.

(6) Adhesiveness after forming

Cans judged as formable (rated GOOD or higher) in the formability evaluation in (5) above were used. A sample of a peel test (width: 15 mm, length: 120 mm) was cut from the body of each can. Part of the laminate layer was peeled from a long-side end of the cut sample. The peeled portion (film) of the laminate layer was pulled in a direction opposite to the peeling direction (at an angle of 180°), and a peel test was performed using a tensile tester at a cross head speed of 30 mm/min to evaluate adhesion per 15 mm width. The inner and outer surfaces of the can body were evaluated.

(Evaluation criteria)

EXCELLENT: 10.0 N/15 mm or more
GOOD: 5.0 N/15 mm or more and less than 10.0 N/15 mm
POOR: less than 5.0 N/15 mm
-: Not evaluated

(7) Impact resistance

Cans judged as formable (rated GOOD or higher) in (4) above were used. These cans were fully filled with water. Ten cans were used for each test, and each can was dropped from a height of 1.25 m to a vinyl chloride tile floor surface. Then a voltage of 6 V was applied between an electrode and the metal can, and a current value was read 3 seconds after the application of the voltage. The average value of the measurements for 10 cans was determined.

(Evaluation criteria)

EXCELLENT: Less than 0.01 mA
GOOD: 0.01 mA or more and less than 0.1 mA
POOR: 0.1 mA or more
-: Not evaluated

[Table 1-1]

| No. | COMPOSITION OF RESIN IN FILM ON INNER SIDE OF CONTAINER | | | | | | | | | |
| | COMPOSITION OF POLYESTER | | | | | OLEFIN RESIN | | FILM CONFIGU-RATION | WHITE PIGMENT | |
| | DICARBOXYL-IC ACID COM-PONENT | GLYCOL COMPO-NENT | CONTENT OF ETHYLENE TEREPHTHA-LATE UNIT (mol%) | CONTENT OF BUTYLENE TEREPHTHALATE UNIT (mol%) | AMOUNT ADDED (mass%) | TYPE OF RESIN | AMOUNT ADDED (mass%) | | TYPE | AMOUNT ADDED (PHR) |
|---|---|---|---|---|---|---|---|---|---|---|
| INVENTIVE EXAMPLE 1 | TEREPHTHALIC ACID (100) | ETHYLENE GLYCOL (100) | 100 | 0 | 100 | - | - | SINGLE LAYER | - | - |
| INVENTIVE EXAMPLE 2 | TEREPHTHALIC ACID (100) | ETHYLENE GLYCOL (100) | 100 | 0 | 100 | - | - | SINGLE LAYER | - | - |
| INVENTIVE EXAMPLE 3 | TEREPHTHALIC ACID (100) | ETHYLENE GLYCOL (95) DIETHYLENE GLYCOL (5) | 95 | 0 | 100 | - | - | SINGLE LAYER | - | - |
| INVENTIVE EXAMPLE 4 | TEREPHTHALIC ACID (100) | ETHYLENE GLYCOL (98) DIETHYLENE GLYCOL (2) | 98 | 0 | 100 | - | - | SINGLE LAYER | - | - |
| INVENTIVE EXAMPLE 5 | TEREPHTHALIC ACID (88) ISOPHTHALIC ACID (12) | ETHYLENE GLYCOL (100) | 88 | 0 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 20.0 |
| INVENTIVE EXAMPLE 6 | TEREPHTHALIC ACID (88) ISOPHTHALIC ACID (12) | ETHYLENE GLYCOL (100) | 88 | 0 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 20.0 |

| No. | COMPOSITION OF RESIN IN FILM ON INNER SIDE OF CONTAINER | | | | | | | | | |
| --- | --- | --- | --- | --- | --- | --- | --- | --- | --- | --- |
| | COMPOSITION OF POLYESTER | | | | | OLEFIN RESIN | | FILM CONFIGU-RATION | WHITE PIGMENT | |
| | DICARBOXYL-IC ACID COM-PONENT | GLYCOL COMPO-NENT | CONTENT OF ETHYLENE TEREPHTHA-LATE UNIT (mol%) | CONTENT OF BUTYLENE TEREPHTHALATE UNIT (mol%) | AMOUNT ADDED (mass%) | TYPE OF RESIN | AMOUNT ADDED (mass%) | | TYPE | AMOUNT ADDED (PHR) |
| INVENTIVE EXAMPLE 7 | TEREPHTHAL-IC ACID (88) ISOPHTHALIC ACID (12) | ETHYLENE GLYCOL (95) DIETHYLENE GLYCOL (5) | 88 | 0 | 100 | - | - | SINGLE LAYER | TITANIUM DIOXIDE | 25.0 |
| INVENTIVE EXAMPLE 8 | TEREPHTHALIC ACID (88) ISOPHTHALIC ACID (12) | ETHYLENE GLYCOL (95) DIETHYLENE GLYCOL (5) | 88 | 0 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 25.0 |
| INVENTIVE EXAMPLE 9 | TEREPHTHALIC ACID (100) | ETHYLENE GLYCOL (40) BUTYLENE GLYCOL (60) | 40 | 60 | 100 | - | - | SINGLE LAYER | - | - |
| INVENTIVE EXAMPLE 10 | TEREPHTHALIC ACID (100) | ETHYLENE GLYCOL (40) BUTYLENE GLYCOL (60) | 40 | 60 | 100 | - | - | SINGLE LAYER | - | - |
| INVENTIVE EXAMPLE 11 | TEREPHTHALIC ACID (92) ISOPHTHALIC ACID (8) | ETHYLENE GLYCOL (40) BUTYLENE GLYCOL (60) | 37 | 55 | 100 | - | - | SINGLE LAYER | - | - |
| INVENTIVE EXAMPLE 12 | TEREPHTHALIC ACID (92) ISOPHTHALIC ACID (8) | ETHYLENE GLYCOL (40) BUTYLENE GLYCOL (60) | 37 | 55 | 100 | - | - | SINGLE LAYER | - | - |

EP 3 064 349 B1

| No. | COMPOSITION OF RESIN IN FILM ON INNER SIDE OF CONTAINER | | | | | | | | | |
| | COMPOSITION OF POLYESTER | | | | | OLEFIN RESIN | | FILM CONFIGU-RATION | WHITE PIGMENT | |
| | DICARBOXYL-IC ACID COM-PONENT | GLYCOL COMPO-NENT | CONTENT OF ETHYLENE TEREPHTHA-LATE UNIT (mol%) | CONTENT OF BUTYLENE TEREPHTHALATE UNIT (mol%) | AMOUNT ADDED (mass%) | TYPE OF RESIN | AMOUNT ADDED (mass%) | | TYPE | AMOUNT ADDED (PHR) |
| INVENTIVE EXAMPLE 13 | TEREPHTHAL-IC ACID (100) | ETHYLENE GLYCOL (50) BUTYLENE GLYCOL (50) | 50 | 50 | 100 | - | - | TOP LAYER: 1.5 $\mu$m INTERMEDI-ATE LAYER: 15 $\mu$m ADHESION LAYER: 1.5 $\mu$m | TITANIUM DI-OXIDE (INTER-MEDIATE LAY-ER) | 18.0 |
| INVENTIVE EXAMPLE 14 | TEREPHTHALIC ACID (100) | ETHYLENE GLYCOL (60) BUTYLENE GLYCOL (40) | 60 | 40 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 20.0 |
| INVENTIVE EXAMPLE 15 | TEREPHTHALIC ACID (95) ISOPHTHALIC ACID (5) | ETHYLENE GLYCOL (100) | 95 | 0 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 20.0 |
| INVENTIVE EXAMPLE 16 | TEREPHTHALIC ACID (100) | ETHYLENE GLYCOL (100) | 100 | 0 | 100 | - | - | SINGLE LAYER | - | - |
| INVENTIVE EXAMPLE 17 | TEREPHTHALIC ACID (88) ISOPHTHALIC ACID (12) | ETHYLENE GLYCOL (100) | 88 | 0 | 100 | - | - | TOP LAYER: 2 $\mu$m INTERMEDI-ATE LAYER: 16 $\mu$m ADHESION LAYER: 2 $\mu$m | BARIUM SUL-FATE (INTER-MEDIATE LAY-ER) | 20.0 |

(continued)

| No. | COMPOSITION OF RESIN IN FILM ON INNER SIDE OF CONTAINER | | | | | | | | | |
|---|---|---|---|---|---|---|---|---|---|---|
| | COMPOSITION OF POLYESTER | | | | | OLEFIN RESIN | | FILM CONFIGURATION | WHITE PIGMENT | |
| | DICARBOXYLIC ACID COMPONENT | GLYCOL COMPONENT | CONTENT OF ETHYLENE TEREPHTHALATE UNIT (mol%) | CONTENT OF BUTYLENE TEREPHTHALATE UNIT (mol%) | AMOUNT ADDED (mass%) | TYPE OF RESIN | AMOUNT ADDED (mass%) | | TYPE | AMOUNT ADDED (PHR) |
| INVENTIVE EXAMPLE 18 | TEREPHTHALIC ACID (88) ISOPHTHALIC ACID (12) | ETHYLENE GLYCOL (100) | 88 | 0 | 100 | - | - | TOP LAYER: 2 μm INTERMEDIATE LAYER: 16 μm ADHESION LAYER: 2 μm | TITANIUM DIOXIDE (TOP LAYER) | 5.0 |
| | | | | | | - | - | | TITANIUM DIOXIDE (INTERMEDIATE LAYER) | 25.0 |
| | | | | | | | | | TITANIUM DIOXIDE (ADHESION LAYER) | 5.0 |
| INVENTIVE EXAMPLE 19 | TEREPHTHALIC ACID (100) | ETHYLENE GLYCOL (100) | 100 | 0 | 98 | POLYPROPYLENE | 2 | SINGLE LAYER | - | - |
| COMPARATIVE EXAMPLE 1 | TEREPHTHALIC ACID (100) | ETHYLENE GLYCOL (100) | 100 | 0 | 100 | - | - | SINGLE LAYER | - | - |
| COMPARATIVE EXAMPLE 2 | TEREPHTHALIC ACID (100) | ETHYLENE GLYCOL (100) | 100 | 0 | 100 | - | - | SINGLE LAYER | - | - |
| COMPARATIVE EXAMPLE 3 | TEREPHTHALIC ACID (88) ISOPHTHALIC ACID (12) | ETHYLENE GLYCOL (100) | 88 | 0 | 100 | - | - | TOP LAYER: 2 μm INTERMEDIATE LAYER: 16 μm ADHESION LAYER: 2 μm | TITANIUM DIOXIDE (INTERMEDIATE LAYER) | 20.0 |

EP 3 064 349 B1

(continued)

| No. | COMPOSITION OF RESIN IN FILM ON INNER SIDE OF CONTAINER | | | | | | | | | |
| | COMPOSITION OF POLYESTER | | | | | OLEFIN RESIN | | FILM CONFIGU-RATION | WHITE PIGMENT | |
| | DICARBOXYL-IC ACID COM-PONENT | GLYCOL COMPO-NENT | CONTENT OF ETHYLENE TEREPHTHA-LATE UNIT (mol%) | CONTENT OF BUTYLENE TEREPHTHALATE UNIT (mol%) | AMOUNT ADDED (mass%) | TYPE OF RESIN | AMOUNT ADDED (mass%) | | TYPE | AMOUNT ADDED (PHR) |
| COMPARA-TIVE EXAM-PLE 4 | TEREPHTHAL-IC ACID (92) ISOPHTHALIC ACID (8) | ETHYLENE GLYCOL (40) BUTYLENE GLYCOL (60) | 37 | 55 | 100 | - | - | SINGLE LAYER | - | - |
| COMPARA-TIVE EXAM-PLE 5 | POLYPROPYLENE | | 0 | 0 | 100 | - | - | SINGLE LAYER | - | - |
| INVENTIVE EXAMPLE 20 | TEREPHTHALIC ACID (100) | ETHYLENE GLYCOL (40) BUTYLENE GLYCOL (60) | 40 | 60 | 100 | - | - | SINGLE LAYER | - | - |
| INVENTIVE EXAMPLE 21 | TEREPHTHALIC ACID (100) | ETHYLENE GLYCOL (50) BUTYLENE GLYCOL (50) | 50 | 50 | 100 | - | - | TOP LAYER: 1.5 $\mu$m INTERMEDI-ATE LAYER: 15 $\mu$m ADHESION LAYER: 1.5 $\mu$m | TITANIUM DI-OXIDE (INTER-MEDIATE LAY-ER) | 18.0 |
| INVENTIVE EXAMPLE 22 | TEREPHTHAUC ACID (100) | ETHYLENE GLYCOL (60) BUTYLENE GLYCOL (40) | 60 | 40 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 20.0 |

[Table 1-2]

COMPOSITION OF RESIN IN FILM ON INNER SIDE OF CONTAINER

| No. | IV OF POLYESTER | Tg OF POLYESTER (°C) | CRYSTALLIZATION TEMPERATURE OF POLYESTER (°C) | MELTING POINT OF POLYESTER (°C) | FILM THICKNESS (µm) | RAMAN BAND INTENSITY RATIO ON FILM SURFACE (BEFORE HEAT TREATMENT) | RAMAN BAND INTENSITY RATIO IN FILM CROSS SECTION (BEFORE HEAT TREATMENT) | RAMAN BAND INTENSITY RATIO IN FILM CROSS SECTION (AFTER HEAT TREATMENT) | AMOUNT OF CHANGE IN RAMAN BAND INTENSITY RATIO IN FILM CROSS SECTION (BEFORE AND AFTER HEAT TREATMENT) |
|---|---|---|---|---|---|---|---|---|---|
| INVENTIVE EXAMPLE 1 | 0.62 | 75 | 140 | 255 | 20 | 0.5 | 0.9 | 0.6 | 0.3 |
| INVENTIVE EXAMPLE 2 | 0.62 | 75 | 140 | 255 | 20 | 0.4 | 0.8 | 0.6 | 0.2 |
| INVENTIVE EXAMPLE 3 | 0.60 | 72 | 150 | 252 | 20 | 0.7 | 1.0 | 0.7 | 0.3 |
| INVENTIVE EXAMPLE 4 | 0.58 | 70 | 145 | 254 | 20 | 0.8 | 1.1 | 0.7 | 0.4 |
| INVENTIVE EXAMPLE 5 | 0.62 | 69 | 160 | 225 | 20 | 0.6 | 0.9 | 0.7 | 0.2 |
| INVENTIVE EXAMPLE 6 | 0.64 | 69 | 160 | 225 | 20 | 0.8 | 1.0 | 0.9 | 0.1 |
| INVENTIVE EXAMPLE 7 | 0.60 | 65 | 160 | 224 | 18 | 0.5 | 0.9 | 0.7 | 0.2 |
| INVENTIVE EXAMPLE 8 | 0.62 | 65 | 160 | 224 | 18 | 0.9 | 1.2 | 0.8 | 0.4 |
| INVENTIVE EXAMPLE 9 | 0.60 | 45 | 80 | 220/255 | 20 | 0.4 | 0.7 | 0.5 | 0.2 |
| INVENTIVE EXAMPLE 10 | 0.60 | 45 | 80 | 220/255 | 18 | 0.9 | 1.3 | 0.9 | 0.4 |

(continued)

| No. | COMPOSITION OF RESIN IN FILM ON INNER SIDE OF CONTAINER | | | | | | | | |
|---|---|---|---|---|---|---|---|---|---|
| | IV OF POLYESTER | Tg OF POLYESTER (°C) | CRYSTALLIZATION TEMPERATURE OF POLYESTER (°C) | MELTING POINT OF POLYESTER (°C) | FILM THICKNESS (μm) | RAMAN BAND INTENSITY RATIO ON FILM SURFACE (BEFORE HEAT TREATMENT) | RAMAN BAND INTENSITY RATIO IN FILM CROSS SECTION (BEFORE HEAT TREATMENT) | RAMAN BAND INTENSITY RATIO IN FILM CROSS SECTION (AFTER HEAT TREATMENT) | AMOUNT OF CHANGE IN RAMAN BAND INTENSITY RATIO IN FILM CROSS SECTION (BEFORE AND AFTER HEAT TREATMENT) |
| INVENTIVE EXAMPLE 11 | 0.62 | 42 | 80 | 215/248 | 18 | 0.3 | 0.9 | 0.8 | 0.1 |
| INVENTIVE EXAMPLE 12 | 0.64 | 42 | 80 | 215/248 | 20 | 0.7 | 1.0 | 0.7 | 0.3 |
| INVENTIVE EXAMPLE 13 | 0.60 | 50 | 90 | 220/255 | 18 | 0.7 | 1.0 | 0.7 | 0.3 |
| INVENTIVE EXAMPLE 14 | 0.60 | 55 | 100 | 220/255 | 20 | 0.9 | 1.3 | 0.9 | 0.4 |
| INVENTIVE EXAMPLE 15 | 0.60 | 72 | 150 | 246 | 20 | 0.6 | 1.0 | 0.8 | 0.2 |
| INVENTIVE EXAMPLE 16 | 0.62 | 75 | 140 | 255 | 20 | 0.9 | 0.7 | 0.2 | 0.5 |
| INVENTIVE EXAMPLE 17 | 0.62 | 69 | 160 | 225 | 20 | 0.6 | 0.9 | 0.7 | 0.2 |
| INVENTIVE EXAMPLE 18 | 0.62 | 69 | 160 | 225 | 20 | 0.6 | 0.9 | 0.7 | 0.2 |
| INVENTIVE EXAMPLE 19 | 0.62 | 75 | 140 | 255 | 20 | 0.9 | 0.7 | 0.2 | 0.5 |
| COMPARATIVE EXAMPLE 1 | 0.60 | 75 | 140 | 255 | 20 | 0.2 | 0.9 | 0.7 | 0.2 |

| No. | COMPOSITION OF RESIN IN FILM ON INNER SIDE OF CONTAINER | | | | | | | | |
|---|---|---|---|---|---|---|---|---|---|
| | IV OF POLY-ESTER | Tg OF POLY-ESTER (°C) | CRYSTALLIZATION TEMPERATURE OF POLYESTER (°C) | MELTING POINT OF POLYESTER (°C) | FILM THICK-NESS (μm) | RAMAN BAND INTENSITY RATIO ON FILM SUR-FACE (BE-FORE HEAT TREATMENT) | RAMAN BAND INTENSITY RATIO IN FILM CROSS SEC-TION (BE-FORE HEAT TREATMENT) | RAMAN BAND INTENSITY RATIO IN FILM CROSS SEC-TION (AFTER HEAT TREAT-MENT) | AMOUNT OF CHANGE IN RAMAN BAND INTENSITY RATIO IN FILM CROSS SEC-TION (BE-FORE AND AFTER HEAT TREATMENT) |
| COMPARATIVE EXAMPLE 2 | 0.60 | 75 | 140 | 255 | 18 | 1.0 | 1.3 | 0.8 | 0.5 |
| COMPARATIVE EXAMPLE 3 | 0.60 | 69 | 160 | 225 | 20 | 0.3 | 0.6 | 0.1 | 0.5 |
| COMPARATIVE EXAMPLE 4 | 0.60 | 42 | 80 | 215/248 | 18 | 1.2 | 1.6 | 1.1 | 0.5 |
| COMPARATIVE EXAMPLE 5 | - | - | - | - | 25 | - | - | - | - |
| INVENTIVE EXAMPLE 20 | 0.60 | 45 | 80 | 220/255 | 18 | 0.9 | 1.1 | 0.9 | 0.2 |
| INVENTIVE EXAMPLE 21 | 0.60 | 50 | 90 | 220/255 | 18 | 0.5 | 0.8 | 0.7 | 0.1 |
| INVENTIVE EXAMPLE 22 | 0.60 | 55 | 100 | 220/255 | 20 | 0.8 | 1.2 | 0.8 | 0.4 |

EP 3 064 349 B1

[Table 2-1]

| No. | COMPOSITION OF RESIN IN FILM ON OUTER SIDE OF CONTAINER | | | | | | | | | | |
| | COMPOSITION OF POLYESTER | | | | | OLEFIN RESIN | | FILM CONFIGU-RATION | WHITE PIGMENT | |
| | DICARBOXYL-IC ACID COM-PONENT | GLYCOL COMPO-NENT | CONTENT OF ETHYLENE TEREPHTHA-LATE UNIT (mol%) | CONTENT OF BUTYLENE TEREPHTHALATE UNIT (mol%) | AMOUNT ADDED (mass%) | TYPE OF RESIN | AMOUNT ADDED (mass%) | | TYPE | AMOUNT ADDED (PHR) |
|---|---|---|---|---|---|---|---|---|---|---|
| INVENTIVE EXAMPLE 1 | TEREPHTHALIC ACID (100) | ETHYLENE GLYCOL (100) | 100 | 0 | 100 | - | - | SINGLE LAYER | - | - |
| INVENTIVE EXAMPLE 2 | TEREPHTHALIC ACID (100) | ETHYLENE GLYCOL (100) | 100 | 0 | 100 | - | - | SINGLE LAYER | - | - |
| INVENTIVE EXAMPLE 3 | TEREPHTHALIC ACID (100) | ETHYLENE GLYCOL (95) DIETHYLENE GLYCOL (5) | 95 | 0 | 100 | - | - | SINGLE LAYER | - | - |
| INVENTIVE EXAMPLE 4 | TEREPHTHALIC ACID (100) | ETHYLENE GLYCOL (98) DIETHYLENE GLYCOL (2) | 98 | 0 | 100 | - | - | SINGLE LAYER | - | - |
| INVENTIVE EXAMPLE 5 | TEREPHTHALIC ACID (88) ISOPHTHALIC ACID (12) | ETHYLENE GLYCOL (100) | 88 | 0 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 20.0 |
| INVENTIVE EXAMPLE 6 | TEREPHTHALIC ACID (88) ISOPHTHALIC ACID (12) | ETHYLENE GLYCOL (100) | 88 | 0 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 20.0 |

| No. | COMPOSITION OF RESIN IN FILM ON OUTER SIDE OF CONTAINER | | | | | | | | | |
| | COMPOSITION OF POLYESTER | | | | | OLEFIN RESIN | | FILM CONFIGU-RATION | WHITE PIGMENT | |
| | DICARBOXYL-IC ACID COM-PONENT | GLYCOL COMPO-NENT | CONTENT OF ETHYLENE TEREPHTHA-LATE UNIT (mol%) | CONTENT OF BUTYLENE TEREPHTHALATE UNIT (mol%) | AMOUNT ADDED (mass%) | TYPE OF RESIN | AMOUNT ADDED (mass%) | | TYPE | AMOUNT ADDED (PHR) |
| INVENTIVE EXAMPLE 7 | TEREPHTHAL-IC ACID (88) ISOPHTHALIC ACID (12) | ETHYLENE GLYCOL (95) DIETHYLENE GLYCOL (5) | 88 | 0 | 100 | - | - | SINGLE LAYER | TITANIUM DIOXIDE | 25.0 |
| INVENTIVE EXAMPLE 8 | TEREPHTHALIC ACID (88) ISOPHTHALIC ACID (12) | ETHYLENE GLYCOL (95) DIETHYLENE GLYCOL (5) | 88 | 0 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 25.0 |
| INVENTIVE EXAMPLE 9 | TEREPHTHALIC ACID (100) | ETHYLENE GLYCOL (40) BUTYLENE GLYCOL (60) | 40 | 60 | 100 | - | - | SINGLE LAYER | - | - |
| INVENTIVE EXAMPLE 10 | TEREPHTHALIC ACID (100) | ETHYLENE GLYCOL (40) BUTYLENE GLYCOL (60) | 40 | 60 | 100 | - | - | SINGLE LAYER | - | - |
| INVENTIVE EXAMPLE 11 | TEREPHTHALIC ACID (92) ISOPHTHALIC ACID (8) | ETHYLENE GLYCOL (40) BUTYLENE GLYCOL (60) | 37 | 55 | 100 | - | - | SINGLE LAYER | - | - |
| INVENTIVE EXAMPLE 12 | TEREPHTHALIC ACID (92) ISOPHTHALIC ACID (8) | ETHYLENE GLYCOL (40) BUTYLENE GLYCOL (60) | 37 | 55 | 100 | - | - | SINGLE LAYER | - | - |

| No. | COMPOSITION OF RESIN IN FILM ON OUTER SIDE OF CONTAINER | | | | | | | | | | |
| | COMPOSITION OF POLYESTER | | | | | OLEFIN RESIN | | FILM CONFIGU-RATION | WHITE PIGMENT | |
| | DICARBOXYL-IC ACID COM-PONENT | GLYCOL COMPO-NENT | CONTENT OF ETHYLENE TEREPHTHA-LATE UNIT (mol%) | CONTENT OF BUTYLENE TEREPHTHALATE UNIT (mol%) | AMOUNT ADDED (mass%) | TYPE OF RESIN | AMOUNT ADDED (mass%) | | TYPE | AMOUNT ADDED (PHR) |
| INVENTIVE EXAMPLE 13 | TEREPHTHAL-IC ACID (100) | ETHYLENE GLYCOL (50) BUTYLENE GLYCOL (50) | 50 | 50 | 100 | - | - | TOP LAYER: 1.5 $\mu$m INTERMEDI-ATE LAYER: 15 $\mu$m ADHESION LAYER: 1.5 $\mu$m | TITANIUM DI-OXIDE (INTER-MEDIATE LAY-ER) | 18.0 |
| INVENTIVE EXAMPLE 14 | TEREPHTHALIC ACID (100) | ETHYLENE GLYCOL (60) BUTYLENE GLYCOL (40) | 60 | 40 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 20.0 |
| INVENTIVE EXAMPLE 15 | TEREPHTHALIC ACID (95) ISOPHTHALIC ACID (5) | ETHYLENE GLYCOL (100) | 95 | 0 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 20.0 |
| INVENTIVE EXAMPLE 16 | TEREPHTHALIC ACID (100) | ETHYLENE GLYCOL (100) | 100 | 0 | 100 | - | - | SINGLE LAYER | - | - |
| INVENTIVE EXAMPLE 17 | TEREPHTHALIC ACID (88) ISOPHTHALIC ACID (12) | ETHYLENE GLYCOL (100) | 88 | 0 | 100 | - | - | TOP LAYER: 2 $\mu$m INTERMEDI-ATE LAYER: 9 $\mu$m ADHESION LAYER: 2 $\mu$m | BARIUM SUL-FATE (INTER-MEDIATE LAY-ER) | 20.0 |

| No. | COMPOSITION OF RESIN IN FILM ON OUTER SIDE OF CONTAINER | | | | | | | | | |
| --- | --- | --- | --- | --- | --- | --- | --- | --- | --- | --- |
| | COMPOSITION OF POLYESTER | | | | | OLEFIN RESIN | | FILM CONFIGURATION | WHITE PIGMENT | |
| | DICARBOXYLIC ACID COMPONENT | GLYCOL COMPONENT | CONTENT OF ETHYLENE TEREPHTHALATE UNIT (mol%) | CONTENT OF BUTYLENE TEREPHTHALATE UNIT (mol%) | AMOUNT ADDED (mass%) | TYPE OF RESIN | AMOUNT ADDED (mass%) | | TYPE | AMOUNT ADDED (PHR) |
| INVENTIVE EXAMPLE 18 | TEREPHTHALIC ACID (88) ISOPHTHALIC ACID (12) | ETHYLENE GLYCOL (100) | 88 | 0 | 100 | - | - | TOP LAYER: 2 $\mu$m INTERMEDIATE LAYER: 9 $\mu$m ADHESION LAYER: 2 $\mu$m | TITANIUM DIOXIDE (TOP LAYER) | 5.0 |
| | | | | | | | | | TITANIUM DIOXIDE (INTERMEDIATE LAYER) | 25.0 |
| | | | | | | | | | TITANIUM DIOXIDE (ADHESION LAYER) | 5.0 |
| INVENTIVE EXAMPLE 19 | TEREPHTHALIC ACID (100) | ETHYLENE GLYCOL (100) | 100 | 0 | 98 | POLYPROPYLENE | 2 | SINGLE LAYER | - | - |
| COMPARATIVE EXAMPLE 1 | TEREPHTHALIC ACID (100) | ETHYLENE GLYCOL (100) | 100 | 0 | 100 | - | - | SINGLE LAYER | - | - |
| COMPARATIVE EXAMPLE 2 | TEREPHTHALIC ACID (100) | ETHYLENE GLYCOL (100) | 100 | 0 | 100 | - | - | SINGLE LAYER | - | - |
| COMPARATIVE EXAMPLE 3 | TEREPHTHALIC ACID (88) ISOPHTHALIC ACID (12) | ETHYLENE GLYCOL (100) | 88 | 0 | 100 | - | - | TOP LAYER: 2 $\mu$m INTERMEDIATE LAYER: 16 $\mu$m ADHESION LAYER: 2 $\mu$m | TITANIUM DIOXIDE (INTERMEDIATE LAYER) | 20.0 |

| No. | COMPOSITION OF RESIN IN FILM ON OUTER SIDE OF CONTAINER | | | | | | | | | |
| | COMPOSITION OF POLYESTER | | | | | OLEFIN RESIN | | FILM CONFIGU-RATION | WHITE PIGMENT | |
| | DICARBOXYL-IC ACID COM-PONENT | GLYCOL COMPO-NENT | CONTENT OF ETHYLENE TEREPHTHA-LATE UNIT (mol%) | CONTENT OF BUTYLENE TEREPHTHALATE UNIT (mol%) | AMOUNT ADDED (mass%) | TYPE OF RESIN | AMOUNT ADDED (mass%) | | TYPE | AMOUNT ADDED (PHR) |
| COMPARA-TIVE EXAM-PLE 4 | TEREPHTHAL-IC ACID (92) ISOPHTHALIC ACID (8) | ETHYLENE GLYCOL (40) BUTYLENE GLYCOL (60) | 37 | 55 | 100 | - | - | SINGLE LAYER | - | - |
| COMPARA-TIVE EXAM-PLE 5 | POLYPROPYLENE | | 0 | 0 | 100 | - | - | SINGLE LAYER | - | - |
| INVENTIVE EXAMPLE 20 | TEREPHTHALIC ACID (100) | ETHYLENE GLYCOL (40) BUTYLENE GLYCOL (60) | 40 | 60 | 100 | - | - | SINGLE LAYER | - | - |
| INVENTIVE EXAMPLE 21 | TEREPHTHALIC ACID (100) | ETHYLENE GLYCOL (50) BUTYLENE GLYCOL (50) | 50 | 50 | 100 | - | - | TOP LAYER: 1.5 $\mu$m INTERMEDI-ATE LAYER: 15 $\mu$m ADHESION LAYER: 1.5 $\mu$m | TITANIUM DI-OXIDE (INTER-MEDIATE LAY-ER) | 18.0 |
| INVENTIVE EXAMPLE 22 | TEREPHTHALIC ACID (100) | ETHYLENE GLYCOL (60) BUTYLENE GLYCOL (40) | 60 | 40 | 100 | - | - | TOP LAYER: 2 $\mu$m INTERMEDI-ATE LAYER: 16 $\mu$m ADHESION LAYER: 2 $\mu$m | TITANIUM DI-OXIDE (INTER-MEDIATE LAY-ER) | 20.0 |

EP 3 064 349 B1

[Table 2-2]

| No. | COMPOSITION OF RESIN IN FILM ON OUTER SIDE OF CONTAINER | | | | | | | | |
|---|---|---|---|---|---|---|---|---|---|
| | IV OF POLY-ESTER | Tg OF POLY-ESTER (°C) | CRYSTALLIZATION TEMPERATURE OF POLYESTER (°C) | MELTING POINT OF POLYESTER (°C) | FILM THICK-NESS (μm) | RAMAN BAND INTENSITY RATIO ON FILM SUR-FACE (BE-FORE HEAT TREATMENT) | RAMAN BAND INTENSITY RATIO IN FILM CROSS SEC-TION (BE-FORE HEAT TREATMENT) | RAMAN BAND INTENSITY RATIO IN FILM CROSS SEC-TION (AFTER HEAT TREAT-MENT) | AMOUNT OF CHANGE IN RAMAN BAND INTENSITY RATIO IN FILM CROSS SEC-TION (BE-FORE AND AFTER HEAT TREATMENT) |
| INVENTIVE EXAMPLE 1 | 0.62 | 75 | 140 | 255 | 15 | 0.5 | 0.9 | 0.6 | 0.3 |
| INVENTIVE EXAMPLE 2 | 0.62 | 75 | 140 | 255 | 15 | 0.4 | 0.8 | 0.6 | 0.2 |
| INVENTIVE EXAMPLE 3 | 0.60 | 72 | 150 | 252 | 18 | 0.7 | 1.0 | 0.7 | 0.3 |
| INVENTIVE EXAMPLE 4 | 0.58 | 70 | 145 | 254 | 18 | 0.8 | 1.1 | 0.7 | 0.4 |
| INVENTIVE EXAMPLE 5 | 0.62 | 69 | 160 | 225 | 18 | 0.6 | 0.9 | 0.7 | 0.2 |
| INVENTIVE EXAMPLE 6 | 0.64 | 69 | 160 | 225 | 12 | 0.8 | 1.0 | 0.9 | 0.1 |
| INVENTIVE EXAMPLE 7 | 0.60 | 65 | 160 | 224 | 18 | 0.5 | 0.9 | 0.7 | 0.2 |
| INVENTIVE EXAMPLE 8 | 0.62 | 65 | 160 | 224 | 18 | 0.9 | 1.2 | 0.8 | 0.4 |
| INVENTIVE EXAMPLE 9 | 0.60 | 45 | 80 | 220/255 | 18 | 0.4 | 0.7 | 0.5 | 0.2 |
| INVENTIVE EXAMPLE 10 | 0.60 | 45 | 80 | 220/255 | 18 | 0.9 | 1.3 | 0.9 | 0.4 |

| No. | COMPOSITION OF RESIN IN FILM ON OUTER SIDE OF CONTAINER | | | | | | | | |
|---|---|---|---|---|---|---|---|---|---|
| | IV OF POLY-ESTER | Tg OF POLY-ESTER (°C) | CRYSTALLIZATION TEMPERATURE OF POLYESTER (°C) | MELTING POINT OF POLYESTER (°C) | FILM THICKNESS (µm) | RAMAN BAND INTENSITY RATIO ON FILM SUR-FACE (BE-FORE HEAT TREATMENT) | RAMAN BAND INTENSITY RATIO IN FILM CROSS SEC-TION (BE-FORE HEAT TREATMENT) | RAMAN BAND INTENSITY RATIO IN FILM CROSS SEC-TION (AFTER HEAT TREAT-MENT) | AMOUNT OF CHANGE IN RAMAN BAND INTENSITY RATIO IN FILM CROSS SEC-TION (BE-FORE AND AFTER HEAT TREATMENT) |
| INVENTIVE EXAMPLE 11 | 0.62 | 42 | 80 | 215/248 | 18 | 0.3 | 0.9 | 0.8 | 0.1 |
| INVENTIVE EXAMPLE 12 | 0.64 | 42 | 80 | 215/248 | 20 | 0.7 | 1.0 | 0.7 | 0.3 |
| INVENTIVE EXAMPLE 13 | 0.60 | 50 | 90 | 220/255 | 18 | 0.7 | 1.0 | 0.7 | 0.3 |
| INVENTIVE EXAMPLE 14 | 0.60 | 55 | 100 | 220/255 | 15 | 0.9 | 1.3 | 0.9 | 0.4 |
| INVENTIVE EXAMPLE 15 | 0.60 | 72 | 150 | 246 | 12 | 0.6 | 1.0 | 0.8 | 0.2 |
| INVENTIVE EXAMPLE 16 | 0.62 | 75 | 140 | 255 | 12 | 0.9 | 0.7 | 0.2 | 0.5 |
| INVENTIVE EXAMPLE 17 | 0.62 | 69 | 160 | 225 | 13 | 0.6 | 0.9 | 0.7 | 0.2 |
| INVENTIVE EXAMPLE 18 | 0.62 | 69 | 160 | 225 | 13 | 0.6 | 0.9 | 0.7 | 0.2 |
| INVENTIVE EXAMPLE 19 | 0.62 | 75 | 140 | 255 | 12 | 0.9 | 0.7 | 0.2 | 0.5 |
| COMPARATIVE EXAMPLE 1 | 0.60 | 75 | 140 | 255 | 18 | 0.2 | 0.9 | 0.7 | 0.2 |

| No. | COMPOSITION OF RESIN IN FILM ON OUTER SIDE OF CONTAINER | | | | | | | | |
|---|---|---|---|---|---|---|---|---|---|
| | IV OF POLY-ESTER | Tg OF POLY-ESTER (°C) | CRYSTALLIZATION TEMPERATURE OF POLYESTER (°C) | MELTING POINT OF POLYESTER (°C) | FILM THICK-NESS (μm) | RAMAN BAND INTENSITY RATIO ON FILM SUR-FACE (BE-FORE HEAT TREATMENT) | RAMAN BAND INTENSITY RATIO IN FILM CROSS SEC-TION (BE-FORE HEAT TREATMENT) | RAMAN BAND INTENSITY RATIO IN FILM CROSS SEC-TION (AFTER HEAT TREAT-MENT) | AMOUNT OF CHANGE IN RAMAN BAND INTENSITY RATIO IN FILM CROSS SEC-TION (BE-FORE AND AFTER HEAT TREATMENT) |
| COMPARATIVE EXAMPLE 2 | 0.60 | 75 | 140 | 255 | 15 | 1.0 | 1.3 | 0.8 | 0.5 |
| COMPARATIVE EXAMPLE 3 | 0.60 | 69 | 160 | 225 | 18 | 0.3 | 0.6 | 0.1 | 0.5 |
| COMPARATIVE EXAMPLE 4 | 0.60 | 42 | 80 | 215/248 | 15 | 1.2 | 1.6 | 1.1 | 0.5 |
| COMPARATIVE EXAMPLE 5 | - | - | - | - | 25 | - | - | - | - |
| INVENTIVE EXAMPLE 20 | 0.60 | 45 | 80 | 220/255 | 18 | 0.9 | 1.1 | 0.9 | 0.2 |
| INVENTIVE EXAMPLE 21 | 0.60 | 50 | 90 | 220/255 | 18 | 0.5 | 0.8 | 0.7 | 0.1 |
| INVENTIVE EXAMPLE 22 | 0.60 | 55 | 100 | 220/255 | 15 | 0.8 | 1.2 | 0.8 | 0.4 |

[Table 3]

| No. | LAMINATION CONDITIONS | |
| --- | --- | --- |
| | TIME OF CONTACT AT MELTING POINT OF FILM OR HIGHER(ms) | TEMPERATURE OF LAMINATION ROLL (°C) |
| INVENTIVE EXAMPLE 1 | 10.0 | 100.0 |
| INVENTIVE EXAMPLE 2 | 8.0 | 90.0 |
| INVENTIVE EXAMPLE 3 | 12.0 | 120.0 |
| INVENTIVE EXAMPLE 4 | 12.0 | 110.0 |
| INVENTIVE EXAMPLE 5 | 10.0 | 120.0 |
| INVENTIVE EXAMPLE 6 | 12.0 | 120.0 |
| INVENTIVE EXAMPLE 7 | 9.0 | 80.0 |
| INVENTIVE EXAMPLE 8 | 13.0 | 125.0 |
| INVENTIVE EXAMPLE 9 | 7.0 | 80.0 |
| INVENTIVE EXAMPLE 10 | 11.0 | 100.0 |
| INVENTIVE EXAMPLE 11 | 7.0 | 70.0 |
| INVENTIVE EXAMPLE 12 | 12.0 | 90.0 |
| INVENTIVE EXAMPLE 13 | 8.0 | 100.0 |
| INVENTIVE EXAMPLE 14 | 13.0 | 130.0 |
| INVENTIVE EXAMPLE 15 | 10.0 | 80.0 |
| INVENTIVE EXAMPLE 16 | 10.0 | 100.0 |
| INVENTIVE EXAMPLE 17 | 10.0 | 100.0 |
| INVENTIVE EXAMPLE 18 | 10.0 | 100.0 |
| INVENTIVE EXAMPLE 19 | 10.0 | 100.0 |
| COMPARATIVE EXAMPLE 1 | 4.0 | 70.0 |
| COMPARATIVE EXAMPLE 2 | 18.0 | 160.0 |
| COMPARATIVE EXAMPLE 3 | 6.0 | 65.0 |
| COMPARATIVE EXAMPLE 4 | 16.0 | 140.0 |
| COMPARATIVE EXAMPLE 5 | 12.0 | 100.0 |
| INVENTIVE EXAMPLE 20 | 10.0 | 80.0 |
| INVENTIVE EXAMPLE 21 | 7.0 | 90.0 |
| INVENTIVE EXAMPLE 22 | 12.0 | 100.0 |

[Table 4]

| RESULTS OF PERFORMANCE EVALUATION OF LAMINATED METAL SHEET | | | |
| --- | --- | --- | --- |
| No. | FORMABILITY | ADHESIVENESS AFTER FORMING | IMPACT RESISTANCE |
| INVENTIVE EXAMPLE 1 | EXCELLENT | EXCELLENT | EXCELLENT |
| INVENTIVE EXAMPLE 2 | GOOD | GOOD | GOOD |
| INVENTIVE EXAMPLE 3 | EXCELLENT | EXCELLENT | EXCELLENT |
| INVENTIVE EXAMPLE 4 | GOOD | GOOD | GOOD |

(continued)

| RESULTS OF PERFORMANCE EVALUATION OF LAMINATED METAL SHEET | | | |
|---|---|---|---|
| No. | FORMABILITY | ADHESIVENESS AFTER FORMING | IMPACT RESISTANCE |
| INVENTIVE EXAMPLE 5 | EXCELLENT | EXCELLENT | EXCELLENT |
| INVENTIVE EXAMPLE 6 | EXCELLENT | EXCELLENT | EXCELLENT |
| INVENTIVE EXAMPLE 7 | EXCELLENT | EXCELLENT | EXCELLENT |
| INVENTIVE EXAMPLE 8 | GOOD | GOOD | GOOD |
| INVENTIVE EXAMPLE 9 | GOOD | GOOD | GOOD |
| INVENTIVE EXAMPLE 10 | GOOD | GOOD | GOOD |
| INVENTIVE EXAMPLE 11 | GOOD | GOOD | GOOD |
| INVENTIVE EXAMPLE 12 | EXCELLENT | EXCELLENT | EXCELLENT |
| INVENTIVE EXAMPLE 13 | EXCELLENT | EXCELLENT | GOOD |
| INVENTIVE EXAMPLE 14 | GOOD | GOOD | GOOD |
| INVENTIVE EXAMPLE 15 | EXCELLENT | EXCELLENT | EXCELLENT |
| INVENTIVE EXAMPLE 16 | GOOD | GOOD | GOOD |
| INVENTIVE EXAMPLE 17 | EXCELLENT | EXCELLENT | EXCELLENT |
| INVENTIVE EXAMPLE 18 | EXCELLENT | EXCELLENT | EXCELLENT |
| INVENTIVE EXAMPLE 19 | GOOD | GOOD | GOOD |
| COMPARATIVE EXAMPLE 1 | POOR | - | - |
| COMPARATIVE EXAMPLE 2 | POOR | - | - |
| COMPARATIVE EXAMPLE 3 | POOR | - | - |
| COMPARATIVE EXAMPLE 4 | POOR | - | - |
| COMPARATIVE EXAMPLE 5 | POOR | - | - |
| INVENTIVE EXAMPLE 20 | EXCELLENT | EXCELLENT | EXCELLENT |
| INVENTIVE EXAMPLE 21 | EXCELLENT | EXCELLENT | EXCELLENT |
| INVENTIVE EXAMPLE 22 | GOOD | GOOD | GOOD |

As shown in TABLES 1 to 4, in all the INVENTIVE EXAMPLES that are within the scope of the present invention, the stability of quality after heat treatment was excellent, and good characteristics were achieved. However, in COMPARATIVE EXAMPLES that are outside the scope of the present invention, characteristics after the heat treatment were poor.

**Claims**

1.  A laminated metal sheet for containers, the laminated metal sheet comprising a metal sheet and a laminate layer that covers at least one side of the metal sheet,
    the laminate layer including a single layer containing 50% by mass or more of polyester or a plurality of layers containing 50% by mass or more of the polyester,
    an intensity ratio $I_{2968}/I_{3085}$ of a Raman band intensity ($I_{2968}$) at a peak top position around 2,968 cm$^{-1}$ to a Raman band intensity ($I_{3085}$) at a peak top position around 3,085 cm$^{-1}$ being a range of 0.3 to 0.9, the Raman band intensity ($I_{2968}$) and the Raman band intensity ($I_{3085}$) being determined by a laser Raman method on a surface of the laminate layer; **characterised in that**:
    the intensity ratio $I_{2968}/I_{3085}$ refers to the surface of the laminate layer before a heat treatment, and **in that**:
    when an entire thicknesswise cross section of the laminate layer is irradiated with linearly polarized laser light in a direction perpendicular to the cross section of the laminate layer, the Raman band intensity ratio $I_{2968}/I_{3085}$ before

the heat treatment is within a range of 0.7 to 1.5.

2. The laminated metal sheet for containers according to claim 1, wherein an amount of change in the Raman band intensity ratio $I_{2968}/I_{3085}$ before and after the heat treatment is 0.4 or less, when the laminated metal sheet for containers is subjected to the heat treatment in a temperature range of 160 to 210°C for 20 minutes, the Raman band intensity ratio $I_{2968}/I_{3085}$ determined by irradiating the entire thicknesswise cross section of the laminate layer with the linearly polarized laser light in the direction perpendicular to the cross section of the laminate layer.

3. The laminated metal sheet for containers according to claim 1 or 2, wherein the laminate layer includes a top layer, an intermediate layer, and a steel sheet-adhesion layer that are stacked on one another, and the intermediate layer contains 5 PHR or more and 30 PHR or less of a white pigment.

4. The laminated metal sheet for containers according to claim 3, wherein each of the top layer and the steel sheet-adhesion layer contains 2 PHR or less of the white pigment.

5. The laminated metal sheet for containers according to claim 3 or 4, wherein the white pigment is titanium dioxide or barium sulfate.

6. The laminated metal sheet for containers according to any one of claims 1 to 5, wherein the laminate layer is formed on a side that later becomes an inner side of a container, and the polyester contained in the laminate layer contains at least 80% by mole of an ethylene terephthalate unit.

7. The laminated metal sheet for containers according to any one of claims 1 to 5, wherein
the laminate layer is formed on a side that later becomes an outer side of a container,
the laminate layer is composed mainly of the polyester, the sum of the content of an ethylene terephthalate unit contained in the polyester and the content of a butylene terephthalate unit contained in the polyester is 80% by mole or more, and
the polyester has a glass transition temperature of 20 to 100°C.

8. A method for producing a metal can, the method comprising:

a printing step of adhering an ink to the laminate layer of a laminated metal sheet for containers and then heat-drying the adhered ink, the laminate layer being formed on a surface of the laminated metal sheet; and,
after the printing step, a can manufacturing step of subjecting the laminated metal sheet for containers to can manufacturing processing; **characterised in that**:
the laminated metal sheet is the laminated metal sheet according to any one of claims 1 to 7.

9. A metal sheet formability evaluation method for evaluating formability of a laminated metal sheet for containers after heat treatment,
the laminated metal sheet for containers including a metal sheet and a laminate layer that covers at least one side of the metal sheet,
the laminate layer including a single layer composed mainly of polyester or a plurality of layers composed mainly of the polyester,
the method comprising:

a first step of determining, on a surface of the laminate layer, a Raman band intensity ($I_{2968}$) at a peak top position around 2,968 cm$^{-1}$ and a Raman band intensity ($I_{3085}$) at a peak top position around 3,085 cm$^{-1}$ by a laser Raman method and then deriving an intensity ratio $I_{2968}/I_{3085}$; **characterised in that**:
the first step is performed before the heat treatment; and **in that** the method further comprises:

a second step of, when an entire thicknesswise cross section of the laminate layer before the heat treatment is irradiated with linearly polarized laser light in a direction perpendicular to the cross section of the laminate layer, deriving the Raman band intensity ratio $I_{2968}/I_{3085}$; and
a third step of evaluating the formability of the laminated metal sheet for containers as good when the intensity ratio $I_{2968}/I_{3085}$ derived in the first step is within the range of 0.3 to 0.9 and the intensity ratio $I_{2968}/I_{3085}$ derived in the second step is within the range of 0.7 to 1.5.

**Patentansprüche**

1. Laminiertes Blech für Behälter, wobei das laminierte Blech ein Blech und eine Laminatschicht umfasst, die mindestens eine Seite des Blechs bedeckt,

   wobei die Laminatschicht eine einzelne Schicht, die 50 Masse-% oder mehr Polyester enthält, oder mehrere Schichten beinhaltet, die 50 Masse-% oder mehr des Polyesters enthalten,

   wobei ein Intensitätsverhältnis $I_{2968}/I_{3085}$ einer Raman-Bandintensität ($I_{2968}$) an einer Spitzenoberposition um 2,968 $cm^{-1}$ zu einer Raman-Bandintensität ($I_{3085}$) an einer Spitzenoberposition um 3,085$cm^{-1}$ in einem Bereich von 0,3 bis 0,9 liegt, wobei die Raman-Bandintensität ($I_{2968}$) und die Raman-Bandintensität ($I_{3085}$) durch ein Raman-Laserverfahren an einer Oberfläche der Laminatschicht bestimmt werden,

   **dadurch gekennzeichnet, dass**

   sich das Intensitätsverhältnis $I_{2968}/I_{3085}$ auf die Oberfläche der Laminatschicht vor einer Wärmebehandlung bezieht, und dadurch, dass

   das Raman-Band-Intensitätsverhältnis $I_{2968}/I_{3085}$ vor der Wärmebehandlung in einem Bereich von 0,7 bis 1,5 liegt, wenn ein Gesamtquerschnitt durch die Dicke der Laminatschicht mit linear polarisiertem Laserlicht in einer Richtung senkrecht zum Querschnitt der Laminatschicht bestrahlt wird.

2. Laminiertes Blech für Behälter nach Anspruch 1, wobei der Umfang der Änderung in dem Raman-Band-Intensitätsverhältnis $I_{2968}/I_{3085}$ vor und nach der Wärmebehandlung 0,4 oder weniger beträgt, wenn das laminierte Blech für Behälter 20 Minuten lang der Wärmebehandlung in einem Temperaturbereich von 160 bis 210 °C unterzogen wird, wobei das Raman-Band-Intensitätsverhältnis $I_{2968}/I_{3085}$ durch Bestrahlen des Gesamtquerschnitts durch die Dicke der Laminatschicht mit linear polarisiertem Laserlicht in der Richtung senkrecht zum Querschnitt der Laminatschicht bestimmt wird.

3. Laminiertes Blech für Behälter nach Anspruch 1 oder 2, wobei die Laminatschicht einer obere Schicht, eine Zwischenschicht und eine Stahlblech-Haftschicht beinhaltet, die übereinander geschichtet sind, und die Zwischenschicht 5 PHR oder mehr und 30 PHR oder weniger eines weißen Pigments enthält.

4. Laminiertes Blech für Behälter nach Anspruch 3, wobei die obere Schicht und die Stahlblech-Haftschicht jeweils 2 PHR oder weniger des weißen Pigments enthalten.

5. Laminiertes Blech für Behälter nach Anspruch 3 oder 4, wobei das weiße Pigment Titandioxid oder Bariumsulfat ist.

6. Laminiertes Blech für Behälter nach einem der Ansprüche 1 bis 5, wobei die Laminatschicht auf einer Seite gebildet ist, die später eine Innenseite eines Behälters wird, und das Polyester, das in der Laminatschicht enthalten ist, mindestens 80 Mol-% einer Ethylenterephthalateinheit enthält.

7. Laminiertes Blech für Behälter nach einem der Ansprüche 1 bis 5, wobei
   die Laminatschicht auf einer Seite gebildet ist, die später eine Außenseite eines Behälters wird,
   die Laminatschicht hauptsächlich aus dem Polyester besteht,
   die Summe des Gehalts an einer Ethylenterephthalateinheit, die in dem Polyester enthalten ist, und des Gehalts an einer Butylenterephthalateinheit, die in dem Polyester enthalten ist, 80 Mol-% oder mehr beträgt und
   das Polyester eine Glasübergangstemperatur von 20 bis 100 °C aufweist.

8. Verfahren zur Produktion einer Metallbüchse, wobei das Verfahren Folgendes umfasst:

   einen Schritt des Druckens zwecks Anhaftens einer Farbe an der Laminatschicht eines laminierten Blechs für Behälter und des nachfolgenden Wärmetrocknens der angehafteten Farbe, wobei die Laminatschicht auf einer Oberfläche des laminierten Blechs gebildet wird, und
   nach dem Schritt des Druckens einen Büchsenherstellungsschritt, in dem das laminierte Blech für Behälter einer Büchsenherstellungsbearbeitung unterzogen wird, **dadurch gekennzeichnet, dass**:
   das laminierte Blech das laminierte Blech nach einem der Ansprüche 1 bis 7 ist.

9. Blechformbarkeitsbewertungsverfahren zum Bewerten der Formbarkeit eines laminierten Blechs für Behälter nach der Wärmebehandlung,
   wobei das laminierte Blech für Behälter ein Blech und eine Laminatschicht beinhaltet, die mindestens eine Seite des Blechs bedeckt,
   wobei die Laminatschicht eine einzelne Schicht, die hauptsächlich aus Polyester besteht, oder mehrere Schichten beinhaltet, die hauptsächlich aus Polyester bestehen,
wobei das Verfahren Folgendes umfasst:

einen ersten Schritt des Bestimmens an einer Oberfläche der Laminatschicht einer Raman-Bandintensität ($I_{2968}$) an einer Spitzenoberposition um 2,968 cm$^{-1}$ und einer Raman-Bandintensität ($I_{3085}$) an einer Spitzenoberposition um 3,085 cm$^{-1}$ durch ein Laser-Raman-Verfahren und dann Ableiten eines Intensitätsverhältnisses $I_{2968}/I_{3085}$

**dadurch gekennzeichnet, dass**

der erste Schritt vor der Wärmebehandlung ausgeführt wird und dass das Verfahren ferner Folgendes umfasst:

einen zweiten Schritt des Ableitens des Raman-Band-Intensitätsverhältnisses $I_{2968}/_{3085}$, wenn ein Gesamtquerschnitt durch die Dicke der Laminatschicht vor der Wärmebehandlung mit linear polarisiertem Laserlicht in einer Richtung senkrecht zum Querschnitt der Laminatschicht bestrahlt wird, und
einen dritten Schritt des Bewertens der Formbarkeit des laminierten Blechs für Behälter als gut, wenn das im ersten Schritt abgeleitete Intensitätsverhältnis $I_{2968}/I_{3085}$ im Bereich von 0,3 bis 0,9 liegt und das im dritten Schritt abgeleitete Intensitätsverhältnis $I_{2968}/I_{3085}$ im Bereich von 0,7 bis 1,5 liegt.

**Revendications**

1.  Tôle métallique stratifiée pour conteneurs, la tôle métallique stratifiée comprenant une tôle métallique et une couche stratifiée qui recouvre au moins un côté de la tôle métallique,
    la couche stratifiée comprenant une couche unique contenant 50 % en masse ou plus de polyester ou une pluralité de couches contenant 50 % en masse ou plus du polyester,
    un rapport d'intensité $I_{2968}/I_{3085}$ entre une intensité de bande de Raman ($I_{2968}$) à une position maximale de pic d'environ 2,968 cm$^{-1}$ et une intensité de bande de Raman ($I_{3085}$) à une position maximale de pic d'environ 3, 085 cm$^{-1}$, étant compris dans une plage de 0,3 à 0,9, l'intensité de bande de Raman ($I_{2968}$) et l'intensité de bande de Raman ($I_{3085}$) étant déterminées par un procédé de Raman au laser sur une surface de la couche stratifiée ;
    **caractérisée en ce que** :
    le rapport d'intensité $I_{2968}/I_{3085}$ se réfère à la surface de la couche stratifiée avant un traitement thermique, et **en ce que** :
    lorsqu'une coupe transversale entière dans le sens d'épaisseur de la couche stratifiée est irradiée à l'aide d'une lumière laser polarisée linéairement dans une direction perpendiculaire à la coupe transversale de la couche stratifiée, le rapport d'intensité de bande de Raman $I_{2968}/I_{3085}$ avant le traitement thermique est compris dans une plage de 0,7 à 1,5.

2.  Tôle métallique stratifiée pour conteneurs selon la revendication 1, dans laquelle une quantité de variation du rapport d'intensité de bande de Raman $I_{2968}/I_{3085}$ avant et après le traitement thermique est de 0,4 ou moins, lorsque la tôle métallique stratifiée pour conteneurs est soumise à un traitement thermique dans une plage de température de 160 à 210°C pendant 20 minutes, le rapport d'intensité de bande de Raman $I_{2968}/I_{3085}$ étant déterminé en irradiant la coupe transversale entière dans le sens d'épaisseur de la couche stratifiée à l'aide la lumière laser polarisée linéairement dans la direction perpendiculaire à la coupe transversale de la couche stratifiée.

3.  Tôle métallique stratifiée pour conteneurs selon la revendication 1 ou 2, dans laquelle la couche stratifiée comprend une couche supérieure, une couche intermédiaire, et une couche d'adhérence de tôle d'acier qui sont empilées les unes sur les autres, et la couche intermédiaire contient 5 PHR ou plus et 30 PHR ou moins d'un pigment blanc.

4.  Tôle métallique stratifiée pour conteneurs selon la revendication 3, dans laquelle chacune des couche supérieure et couche d'adhérence de tôle d'acier contient 2 PHR ou moins du pigment blanc.

5.  Tôle métallique stratifiée pour conteneurs selon la revendication 3 ou 4, dans laquelle le pigment blanc est du dioxyde de titane ou du sulfate de baryum.

6.  Tôle métallique stratifiée pour conteneurs selon l'une quelconque des revendications 1 à 5, dans laquelle la couche stratifiée est formée sur un côté qui devient ensuite un côté intérieur d'un conteneur, et le polyester contenu dans la couche stratifiée contient au moins 80 % en mole d'une unité d'éthylène téréphtalate.

7.  Tôle métallique stratifiée pour conteneurs selon l'une quelconque des revendications 1 à 5, dans laquelle

la couche stratifiée est formée sur un côté qui devient ensuite un côté extérieur d'un conteneur,
la couche stratifiée est composée principalement de polyester,
la somme de la teneur en unité d'éthylène téréphtalate contenue dans le polyester et de la teneur en unité de butylène téréphtalate contenue dans le polyester est de 80 % en mole ou plus, et
le polyester a une température de transition vitreuse de 20 à 100 C.

8. Procédé de fabrication d'une canette métallique, le procédé comprenant :

une étape d'impression consistant à faire adhérer une encre à la couche stratifiée d'une tôle métallique stratifiée pour conteneurs, puis à sécher à chaud l'encre adhérée, la couche stratifiée étant formée sur une surface de la tôle métallique stratifiée ; et,
après l'étape d'impression, une étape de fabrication de canette consistant à soumettre la tôle métallique stratifiée pour conteneurs à un traitement de fabrication de canette ; **caractérisé en ce que** :
la tôle métallique stratifiée est la tôle métallique stratifiée selon l'une quelconque des revendications 1 à 7.

9. Procédé d'évaluation de la capacité de mise en forme d'une tôle métallique pour évaluer une capacité de mise en forme d'une tôle métallique stratifiée pour conteneurs après traitement thermique,
la tôle métallique stratifiée pour conteneurs comprenant une tôle métallique et une couche stratifiée qui recouvre au moins un côté de la tôle métallique,
la couche stratifiée comprenant une couche unique composé principalement de polyester ou une pluralité de couches composées principalement du polyester,
le procédé comprenant :
une première étape de détermination, sur une surface de la couche stratifiée, d'une intensité de bande Raman ($I_{2968}$) à une position maximale de pic d'environ 2,968 cm$^{-1}$ et d'une intensité de bande Raman ($I_{3085}$) à une position maximale de pic d'environ 3,085 cm$^{-1}$ par un procédé de Raman au laser et d'obtention ensuite d'un rapport d'intensité $I_{2968}/I_{3085}$ ; **caractérisé en ce que** :
la première étape est effectuée avant le traitement thermique ; et **en ce que** le procédé comprend en outre :
une deuxième étape consistant à, lorsqu'une coupe transversale entière dans le sens d'épaisseur de la couche stratifiée avant le traitement thermique est irradiée à l'aide d'une lumière laser polarisée linéairement dans une direction perpendiculaire à la coupe transversale de la couche stratifiée, obtenir le rapport d'intensité de bande de Raman $I_{2968}/I_{3085}$ ; et
une troisième étape consistant à évaluer que la capacité de mise en forme de la tôle métallique stratifiée pour conteneurs est satisfaisante lorsque le rapport d'intensité $I_{2968}/I_{3085}$ obtenu lors de la première étape se trouve dans la plage de 0,3 à 0,9 et le rapport d'intensité $I_{2968}/I_{3095}$ obtenu lors de la deuxième étape se trouve dans la plage de 0,7 à 1,5.

**REFERENCES CITED IN THE DESCRIPTION**

**Patent documents cited in the description**

- JP 2002127306 A
- JP 2004345232 A
- JP 2007253454 A